# EUROPEAN PATENT APPLICATION

(11) **EP 4 700 982 A1**
(43) Date of publication of application: **25.02.2026**
(21) Application number: 25725418.5
(22) Date of filing: 15.05.2025
(51) Int. Cl.: H01Q 1/24, H01Q 1/22, H04M 1/02, H04B 5/26, H04W 4/80, G01P 15/00, H04M 1/22, H04M 1/72454, H05B 45/10

(54) **ELECTRONIC DEVICE COMPRISING ANTENNA AND METHOD FOR CONTROLLING VOLTAGE OF ANTENNA**

(30) Priority: 04.07.2024 KR 20240088082; 05.11.2024 KR 20240155605
(71) Applicant: Samsung Electronics Co., Ltd., Suwon-si, Gyeonggi-do 16677 (KR)
(72) Inventor: PARK, Jongho, Suwon-si, Gyeonggi-do 16677 (KR); JUNG, Hyukjin, Suwon-si, Gyeonggi-do 16677 (KR); KIM, Minsoo, Suwon-si, Gyeonggi-do 16677 (KR); KIM, Yongwoon, Suwon-si, Gyeonggi-do 16677 (KR)
(74) Representative: HGF
(86) International application number: PCT/KR2025/006609
(87) International publication number: WO 2026/010129

(57) **Abstract**

An electronic device according to various embodiments of the disclosure may include a sensor module, a near field communication circuit, a metal antenna which is electrically connected to the near field communication circuit, and which includes a conductive portion disposed between a first nonconductive portion and a second nonconductive portion, a coil antenna electrically connected to the near field communication circuit, a processor, and a memory configured to store instructions. The instructions, when executed by the processor, may cause the electronic device to identify the state of the electronic device through the sensor module, and based on the state of the electronic device detected through the sensor module, control the near field communication circuit so as to transfer a first voltage to the metal antenna and to transfer a second voltage to the coil antenna. Various other embodiments may be possible.

## Description

### [Technical Field]

Various embodiments of the disclosure relate to an electronic device including at least one antenna and a method for controlling the voltage transferred to the at least one antenna.

### [Background Art]

There has been increasing use of bar-type, foldable-type, rollable-type, or sliding-type electronic devices. A bar-type electronic device is an electronic device comprising a single, substantially rigid body. A foldable-type electronic device is an electronic device which comprises at least a first housing and a second housing, the first housing being hingedly connected to the second housing so that the first housing can move with respect to the second housing such that the foldable-type electronic device is folded. A rollable-type electronic device comprises at least some part that is flexible so that it can be rolled. A sliding-type electronic device is an electronic device which comprises at least a first housing and a second housing, the first housing being slidably connected to the second housing so that the first housing can slide with respect to the second housing. Electronic devices such as these may be provided with various function.

The electronic devices may transmit and receive various pieces of data with other electronic devices through radio communication.

The electronic devices may include at least one antenna in order to perform radio communication with other electronic devices, for example in order to form one or more wireless networks.

The above-described information may be provided as a related art for the purpose of helping the understanding of the disclosure. No claim or determination is raised regarding whether any of the above description may be applied as a prior art in relation to the disclosure.

### [Disclosure of Invention]

### [Technical Problem]

A foldable electronic device may operate in a state in which first and second housings are folded or unfolded around a hinge.

The foldable electronic device may be an in-folding type and/or out-folding type as the first and second housings rotate by using the hinge. An in-folding type is an electronic device which folds so as to enclose its main, primary or largest screen. An out-folding type is an electronic device which folds so that its main, primary or largest screen is exposed on the outside of the folded device.

The foldable electronic device may perform near field communication (NFC) with another electronic device by using a coil antenna disposed in the second housing.

For example, in case that a wireless communication circuit (for example, NFC IC) transfers only a designated voltage (for example, about 3.3 V) to the coil antenna disposed in the second housing, the performance and usability of the NFC may be degraded according to the foldable electronic device's state (for example, an unfolded state, a folded state, a gripped state, and/or a state of being fitted to a light-emitting diode (LED) case mounting).

The foldable electronic device may operate in a card mode (for example, card emulation function) and in a reader mode (for example, point of sale (POS) function) by using the coil antenna. For example, in case that the electronic device operates in the reader mode, the coil antenna may need a larger amount of power than when operating in the card mode.

For example, in case that only a designated voltage is transferred to the coil antenna through the wireless communication circuit (for example, NFC IC), the performance of the NFC may be degraded.

Various embodiments of the disclosure may provide an electronic device and a method capable of variably controlling a first voltage transferred to a metal antenna (for example, first antenna) and a second voltage transferred to a coil antenna (for example, second antenna), based on the state of the electronic device.

Technical problems to be solved by the disclosure are not limited to the above-mentioned technical problems, and other technical problems not mentioned herein will be clearly understood from the following description by those skilled in the art to which the disclosure pertains.

### [Solution to Problem]

An electronic device according to an embodiment of the disclosure may include a sensor module, a near field communication circuit, a metal antenna which is electrically connected to the near field communication circuit, and which includes a conductive portion disposed between a first nonconductive portion and a second nonconductive portion, a coil antenna electrically connected to the near field communication circuit, a processor, and a memory configured to store instructions. According to an embodiment, the instructions, when executed by the processor, may cause the electronic device to identify the state of the electronic device through the sensor module, and based on the state of the electronic device detected through the sensor module, control the near field communication circuit so as to transfer a first voltage to the metal antenna and to transfer a second voltage to the coil antenna.

A method for controlling a voltage of an electronic device according to an embodiment of the disclosure may include an operation of identifying whether a first housing and a second housing of the electronic device are in an unfolded state or in a folded state. According to an embodiment, the method may include an operation of identifying whether a grip signal is detected from the second housing in case that the first housing and the second housing are in an unfolded state. According to an embodiment, the method may include an operation of transferring a first voltage to a metal antenna disposed on the first housing in case that the grip signal is detected from the second housing.

A method for controlling a voltage of an electronic device according to an embodiment of the disclosure may be performed by using a non-transitory computer-readable storage medium which stores one or more programs. One or more programs according to an embodiment may include instructions which perform operations included in the above-described method, when executed by the processor of the electronic device.

An electronic device according to various embodiments of the disclosure may include a housing including a front plate, a rear plate, and a lateral member surrounding a space between the front plate and the rear plate. According to an embodiment, the electronic device may include a first nonconductive portion and a second nonconductive portion formed on the lateral member in a first direction. According to an embodiment, the electronic device may include a metal antenna including a conductive portion disposed between the first nonconductive portion and the second nonconductive portion, and a coil antenna disposed in the lateral member in a second direction opposite to the first direction. According to an embodiment, the electronic device may include a near field communication circuit electrically connected to the metal antenna and the coil antenna, a sensor module configured to detect a grip position of the housing, a processor, and a memory configured to store instructions. According to an embodiment, the processor may be configured to transfer a first voltage to the metal antenna in case that a grip signal is detected from a part of the housing in the second direction, and transfer a second voltage higher than the first voltage to the coil antenna in case that a grip signal is detected from a part of the housing in the first direction. According to an embodiment, the first voltage transferred to the metal antenna in case that the grip signal is detected from a part of the housing in the second direction may have a voltage higher than the second voltage transferred to the coil antenna in case that the grip signal is detected from a part in the first direction.

### [Advantageous Effects of Invention]

According to various embodiments of the disclosure, voltages transferred to the metal antenna (for example, first antenna) and the coil antenna (for example, second antenna) may be variably controlled based on the state of the electronic device, thereby improving the performance and usability of near field communication.

Various other advantageous effects identified explicitly or implicitly through the disclosure may be provided.

### [Brief Description of Drawings]

In relation to the description of drawings, identical or similar components may be given identical or similar reference numerals.
FIG. 1A is a block diagram of an electronic device in a network environment according to various embodiments of the disclosure.
FIG. 1B is a block diagram of a wireless communication module, a power management module, and an antenna module of an electronic device according to various embodiments of the disclosure.
FIG. 2A is a perspective view illustrating the front surface of an electronic device according to various embodiments of the disclosure in an unfolded state.
FIG. 2B is a top view illustrating the front surface of an electronic device according to various embodiments of the disclosure in an unfolded state.
FIG. 2C is a top view illustrating the rear surface of an electronic device according to various embodiments of the disclosure in an unfolded state.
FIG. 3A is a perspective view illustrating an electronic device according to various embodiments of the disclosure in a folded state.
FIG. 3B is a perspective view illustrating the front surface of an electronic device according to various embodiments of the disclosure in an intermediate state.
FIG. 4 is an exploded perspective view of an electronic device according to various embodiments of the disclosure.
FIG. 5 schematically illustrates some components of an electronic device according to an embodiment of the disclosure.
FIG. 6 schematically illustrates the configuration of a matching circuit according to an embodiment of the disclosure.
FIG. 7 schematically illustrates the configuration of an electronic device according to an embodiment of the disclosure.
FIG. 8A is a flowchart schematically illustrating a method for variably controlling voltages, based on the state of an electronic device according to an embodiment of the disclosure.
FIG. 8B is a flowchart schematically illustrating a method for variably controlling voltages according to the unfolded state and folded state of an electronic device according to an embodiment of the disclosure.
FIG. 9A schematically illustrates a use state in which a metal antenna is used to tag a POS device in an unfolded state of an electronic device according to an embodiment of the disclosure.
FIG. 9B schematically illustrates a use state in which a coil antenna is used to tag a POS device in a folded state of an electronic device according to an embodiment of the disclosure.
FIG. 10A schematically illustrates a first case mounted on an electronic device according to an embodiment of the disclosure.
FIG. 10B schematically illustrates a second case mounted on an electronic device according to an embodiment of the disclosure.
FIG. 10C schematically illustrates a third case mounted on an electronic device according to an embodiment of the disclosure.
FIG. 10D schematically illustrates a first LED case and a second LED case mounted on an electronic device according to an embodiment of the disclosure.
FIG. 11 is a flowchart illustrating a method for variably controlling the voltage transferred to a coil antenna in case that an LED case is mounted on an electronic device according to an embodiment of the disclosure.
FIG. 12 is a flowchart schematically illustrating a method for detecting the illuminance around an electronic device according to an embodiment of the disclosure and variably controlling the voltage transferred to a metal antenna.
FIG. 13A is a perspective view illustrating the front surface of an electronic device according to various embodiments of the disclosure.
FIG. 13B is a perspective view illustrating the rear surface of an electronic device according to various embodiments of the disclosure.
FIG. 14 is an exploded perspective view of an electronic device according to various embodiments of the disclosure.

### [Mode for the Invention]

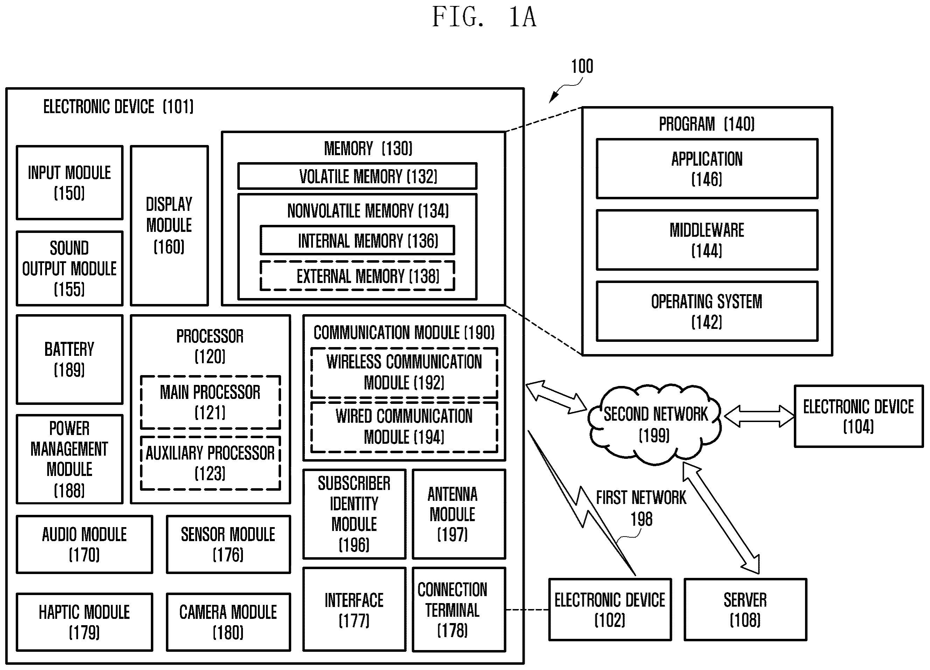

FIG. 1A is a block diagram illustrating an electronic device 101 in a network environment 100 according to various embodiments.

Referring to FIG. 1A, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196. The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

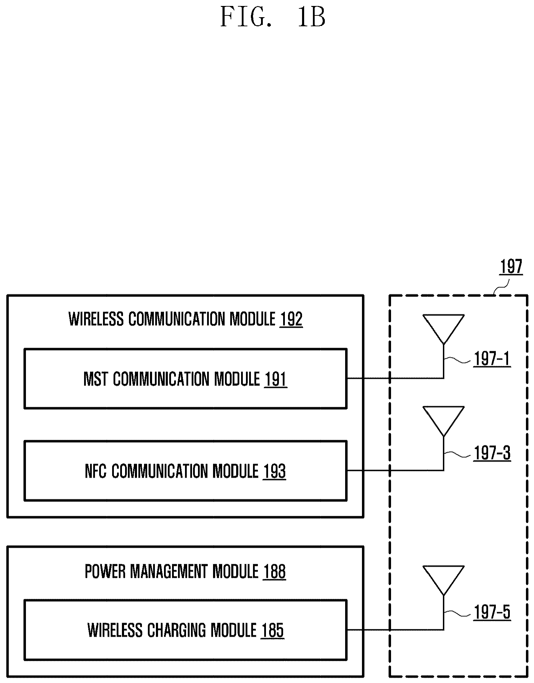

Fig. 1B is a block diagram illustrating the wireless communication module 192, the power management module 188, and the antenna module 197 of the electronic device 101 according to various embodiments.

Referring to Fig. 1B, the wireless communication module 192 may include a magnetic secure transmission (MST) communication module 191 or a near-field communication (NFC) module 193, and the power management module 188 may include a wireless charging module 185. In such a case, the antenna module 197 may include a plurality of antennas that include a MST antenna 197-1 connected with the MST communication module 191, a NFC antenna 197-3 connected with the NFC communication module 193, and a wireless charging antenna 197-5 connected with the wireless charging module 185. For ease of description, the same components as those described in regard to Fig. 1A are briefly described or omitted from the description.

The MST communication module 191 may receive a signal containing control information or payment information such as card information from the processor 120, generate a magnetic signal corresponding to the received signal, and then transfer the generated magnetic signal to the external electronic device 102 (e.g., a point-of-sale (POS) device) via the MST antenna 197-1. To generate the magnetic signal, according to an embodiment, the MST communication module 191 may include a switching module (not shown) that includes one or more switches connected with the MST antenna 197-1, and control the switching module to change the direction of voltage or current supplied to the MST antenna 197-1 according to the received signal. The change of the direction of the voltage or current allows the direction of the magnetic signal (e.g., a magnetic field) emitted from the MST antenna 197-1 to change accordingly. If detected at the external electronic device 102, the magnetic signal with its direction changing may cause an effect (e.g., a waveform) similar to that of a magnetic field that is generated when a magnetic card corresponding to the card information associated with the received signal is swiped through a card reader of the electronic device 102. According to an embodiment, for example, payment-related information and a control signal that are received by the electronic device 102 in the form of the magnetic signal may be further transmitted to an external server 108 (e.g., a payment server) via the network 199.

The NFC communication module 193 may obtain a signal containing control information or payment information such as card information from the processor 120 and transmit the obtained signal to the external electronic device 102 via the NFC antenna 197-3. According to an embodiment, the NFC communication module 193 may receive such a signal transmitted from the external electronic device 102 via the NFC antenna 197-3.

The wireless charging module 185 may wirelessly transmit power to the external electronic device 102 (e.g., a cellular phone or wearable device) via the wireless charging antenna 197-5, or wirelessly receive power from the external electronic device 102 (e.g., a wireless charging device). The wireless charging module 185 may support one or more of various wireless charging schemes including, for example, a magnetic resonance scheme or a magnetic induction scheme.

According to an embodiment, some of the MST antenna 197-1, the NFC antenna 197-3, or the wireless charging antenna 197-5 may share at least part of their radiators. For example, the radiator of the MST antenna 197-1 may be used as the radiator of the NFC antenna 197-3 or the wireless charging antenna 197-5, or vice versa. In such a case, the antenna module 197 may include a switching circuit (not shown) adapted to selectively connect (e.g., close) or disconnect (e.g. open) at least part of the antennas 197-1, 197-3, or 197-5, for example, under the control of the wireless communication module 192 (e.g., the MST communication module 191 or the NFC communication module 193) or the power management module (e.g., the wireless charging module 185). For example, when the electronic device 101 uses a wireless charging function, the NFC communication module 193 or the wireless charging module 185 may control the switching circuit to temporarily disconnect at least one portion of the radiators shared by the NFC antenna 197-3 and the wireless charging antenna 197-5 from the NFC antenna 197-3 and to connect the at least one portion of the radiators with the wireless charging antenna 197-5.

According to an embodiment, at least one function of the MST communication module 191, the NFC communication module 193, or the wireless charging module 185 may be controlled by an external processor (e.g., the processor 120). According to an embodiment, at least one specified function (e.g., a payment function) of the MST communication module 191 or the NFC communication module 193 may be performed in a trusted execution environment (TEE). According to an embodiment, the TEE may form an execution environment in which, for example, at least some designated area of the memory 130 is allocated to be used for performing a function (e.g., a financial transaction or personal information-related function) that requires a relatively high level of security. In such a case, access to the at least some designated area of the memory 130 may be restrictively permitted, for example, according to an entity accessing thereto or an application being executed in the TEE.

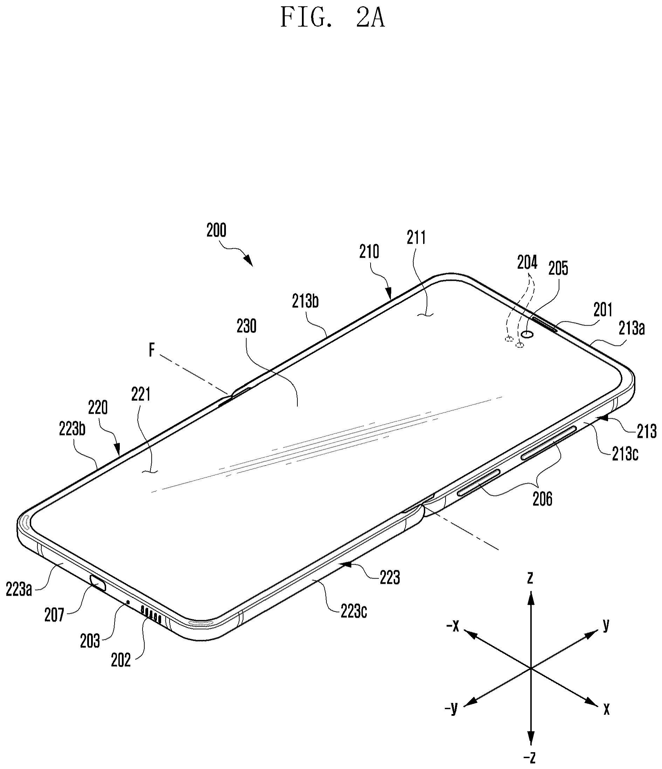

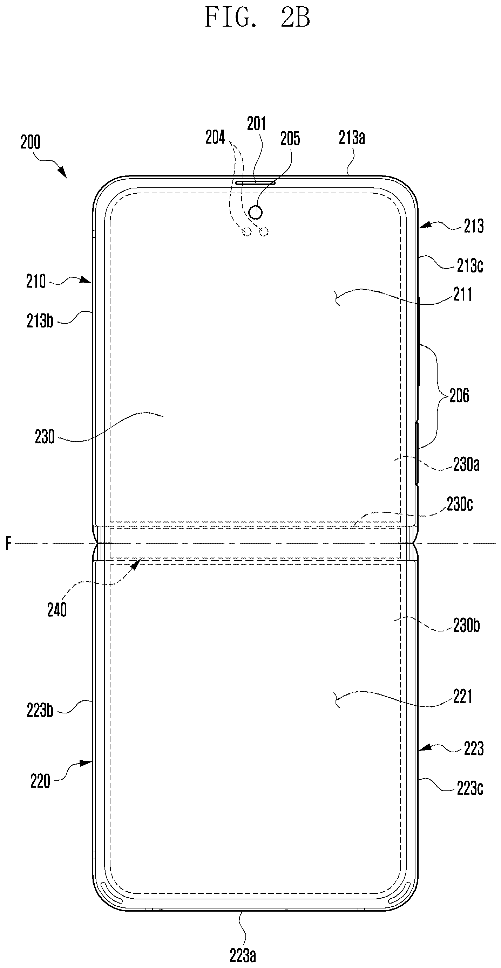

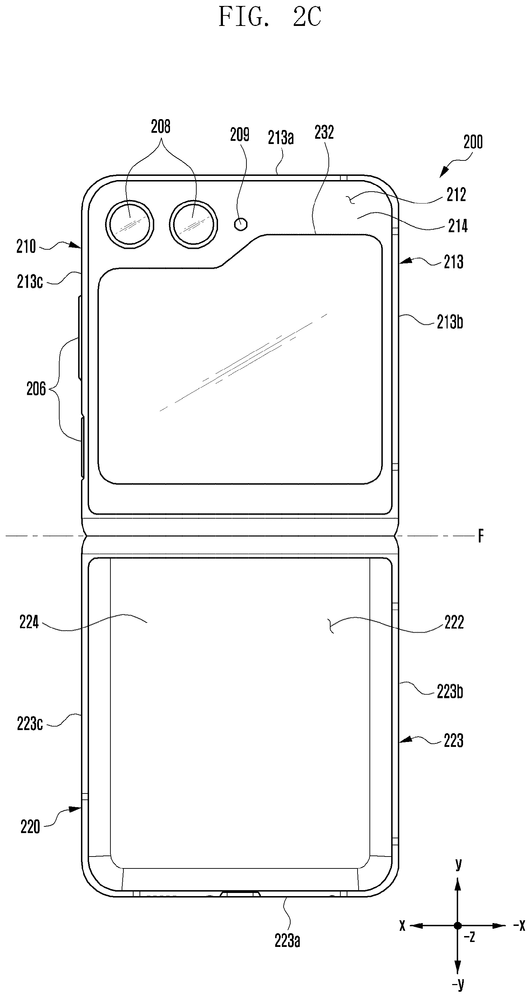

FIG. 2A is a perspective view illustrating the front surface of an electronic device according to various embodiments of the disclosure in an unfolded state. FIG. 2B is a top view illustrating the front surface of an electronic device according to various embodiments of the disclosure in an unfolded state. FIG. 2C is a top view illustrating the rear surface of an electronic device according to various embodiments of the disclosure in an unfolded state.

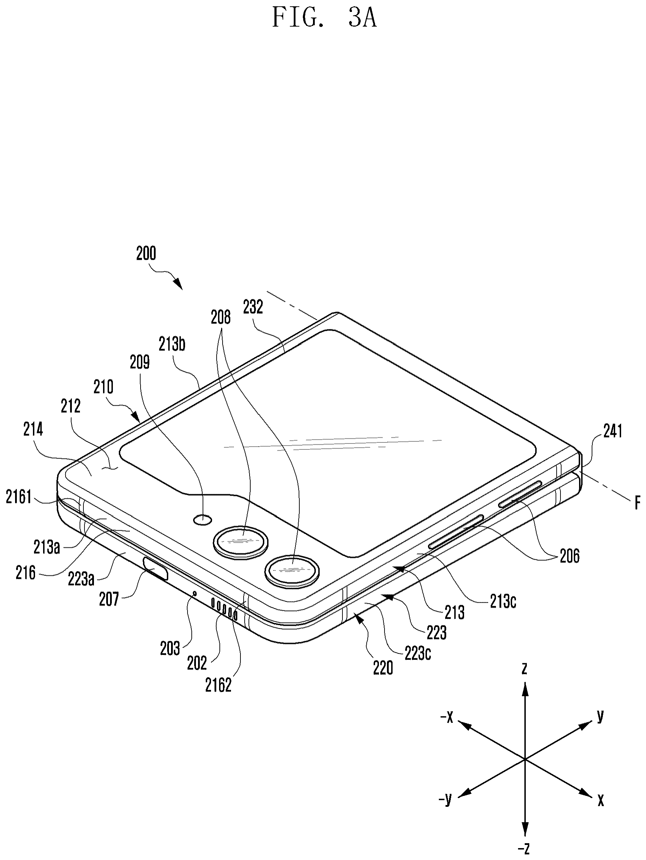

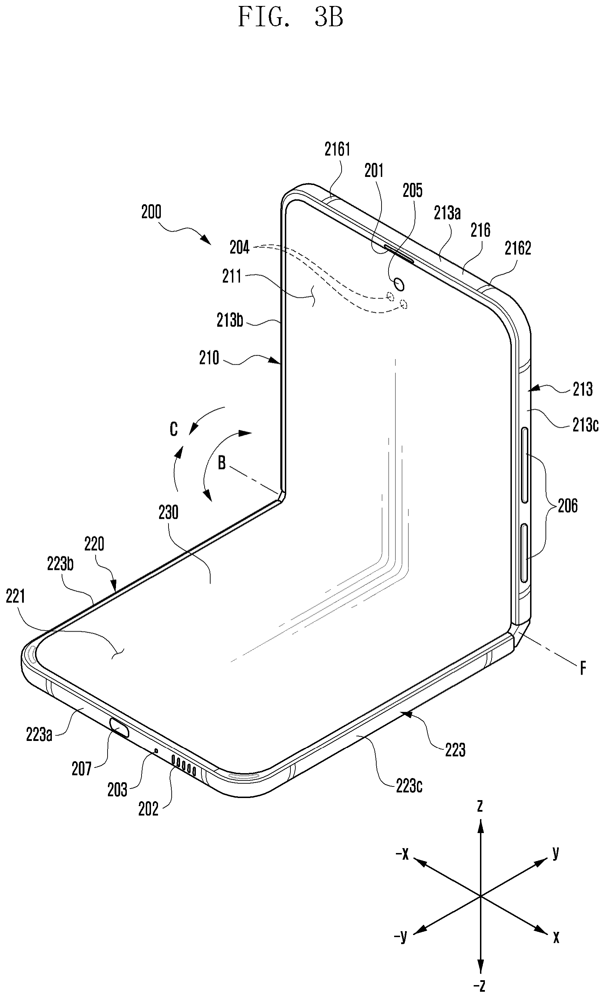

FIG. 3A is a perspective view illustrating an electronic device according to various embodiments of the disclosure in a folded state. FIG. 3B is a perspective view illustrating the front surface of an electronic device according to various embodiments of the disclosure in an intermediate state, the intermediate state being a state in which the electronic device is arranged between a folded state and an unfolded state.

The electronic device 200 illustrated in FIG. 2A to FIG. 3B (for example, the electronic device 101 in FIG. 1) may include a foldable electronic device configured to fold or unfold in the longitudinal direction, for example. Although various embodiments of the disclosure are described with regard to a foldable electronic device configured to fold or unfold in the longitudinal direction, they may be equally applied to a foldable electronic device configured to fold or unfold in the transverse direction. An electronic device which folds in a longitudinal direction folds about an axis arranged perpendicularly to a longitudinal axis of the device. An electronic device which folds in a transvers direction folds about an axis arranged parallel to a longitudinal axis of the device.

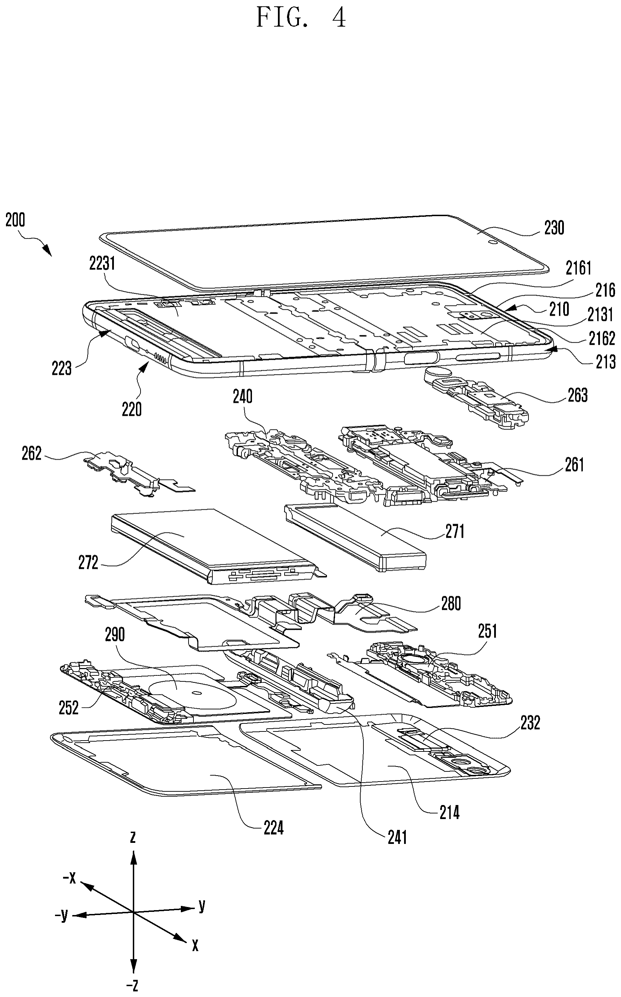

Referring to FIG. 2A to FIG. 3B, the electronic device 200 according to various embodiments of the disclosure (for example, the electronic device 101 in FIG. 1) may include a pair of housings (for example, a first housing 210 and a second housing 220) (for example, foldable housings) configured to fold while facing each other with reference to a hinge 240 (for example, the hinge 240 in FIG. 2B or FIG. 4). For example, the hinge 240 (for example, the hinge 240 in FIG. 2B or FIG. 4) may be disposed in the x-axis direction (for example, transverse direction) or in the y-axis direction (for example, longitudinal direction). For example, two or more hinges 240 may be disposed so as to fold in the same direction or in different directions. For example, the hinge 240 may include a hinge device, a hinge module, or a hinge assembly.

According to various embodiments, the electronic device 200 may include a flexible display 230 (for example, foldable display) disposed in an area formed by the pair of housings 210 and 220. The first housing 210 and the second housing 220 may be disposed on both sides around a folding axis (axis F) and may have shapes substantially symmetrical with regard to the folding axis (axis F). The angle or distance between the first housing 210 and the second housing 220 may vary according to whether the state of the electronic device 200 is an unfolded (or flat) state, a folded state, or an intermediate state.

According to various embodiments, the pair of housings 210 and 220 may include a first housing 210 (for example, first housing structure) coupled to the first side of the hinge 240 (for example, the hinge 240 in FIG. 2B or FIG. 4) and a second housing 220 (for example, second housing structure) coupled to the second side of the hinge 240. The first housing 210 may include a first surface 211 facing in a first direction (for example, forward (z-axis)) direction in an unfolded state and a second surface 212 facing in a second direction (for example, rearward (for example, -z-axis) direction) opposite to the first direction. The second housing 220 may include a third surface 221 facing in the first direction (for example, forward (z-axis)) direction in the unfolded state and a fourth surface 222 facing in the second direction (for example, rearward (for example, -z-axis) direction).

According to an embodiment, the electronic device 200 may operate such that, in the unfolded state, the first surface 211 of the first housing 210 and the third surface 221 of the second housing 220 face in substantially the same first direction (for example, z-axis direction) and, in the folded state, the first surface 211 and the third surface 221 face each other. The electronic device 200 may operate such that, in the unfolded state, the second surface 212 of the first housing 210 and the fourth surface 222 of the second housing face in substantially the same second direction (for example, -z-axis direction) and, in the folded state, the second surface 212 and the fourth surface 222 face in opposite directions. For example, in the folded state of the first housing 210 and the second housing 220, the second surface 212 may face in the first direction (for example, z-axis direction), and the fourth surface 222 may face in the second direction (for example, -z-axis direction).

According to various embodiments, the first housing 210 may include a first lateral frame 213 configured to at least partially form the exterior of the electronic device 200, and a first rear cover 214 coupled to the first lateral frame 213 and configured to form at least a part of the second surface 212 of the electronic device 200. The first lateral frame 213 may include a first lateral surface 213a, a second lateral surface 213b extending from one end of the first lateral surface 213a, and a third lateral surface 213c extending from the other end of the first lateral surface 213a. The first lateral frame 213 may be formed in a rectangular (for example, square or rectangle) shape through the first lateral surface 213a, the second lateral surface 213b, and the third lateral surface 213c.

According to various embodiments, the second housing 220 may include a second lateral frame 223 configured to at least partially form the exterior of the electronic device 200, and a second rear cover 224 coupled to the second lateral frame 223 and configured to form at least a part of the fourth surface 222 of the electronic device 200. The second lateral frame 223 may include a fourth lateral surface 223a, a fifth lateral surface 223b extending from one end of the fourth lateral surface 223a, and a sixth lateral surface 223c extending from the other end of the fourth lateral surface 223a. The second lateral frame 223 may be formed in a rectangular (for example, square or rectangle) shape through the fourth lateral surface 223a, the fifth lateral surface 223b, and the sixth lateral surface 223c.

According to various embodiments, the pair of housings 210 and 220 may not be limited to the illustrated types and couplings, and may be implemented in other shapes or combinations of components and/or couplings thereof. For example, the first lateral frame 213 may be integrally formed with the first rear cover 214, and the second lateral frame 223 may be integrally formed with the second rear cover 224.

According to various embodiments, in the unfolded state of the electronic device 200, the second lateral surface 213b of the first lateral frame 213 and the fifth lateral surface 223b of the second lateral frame 223 may be connected substantially without a gap. In the unfolded state of the electronic device 200, the third lateral surface 213c of the first lateral frame 213 and the sixth lateral surface 223c of the second lateral frame 223 may be connected substantially without a gap. In an embodiment, the electronic device 200 may be configured such that, in the unfolded state, the combined length of the second lateral surface 213b and the fifth lateral surface 223b is larger than the length of the first lateral surface 213a and/or the fourth lateral surface 223a. The electronic device 200 may be configured such that the combined length of the third lateral surface 213c and the sixth lateral surface 223c is larger than the length of the first lateral surface 213a and/or the fourth lateral surface 223a.

According to various embodiments, the first lateral frame 213 and/or the second lateral frame 223 may include a metal or a nonmetal (for example, polymer). For example, the first lateral frame 213 and/or the second lateral frame 223 may include at least one conductive portion 216 and/or 226 (for example, antenna radiator) electrically segmented through at least one nonconductive portion 2161 and 2162 made of a nonmetal (for example, polymer). For example, the at least one conductive portion 216 and/or 226 may be electrically connected to a wireless communication module (for example, the wireless communication module in FIG. 1) disposed on a printed circuit board (for example, the first substrate assembly 261 in FIG. 4) of the electronic device 200, thereby being used as a first antenna and/or a second antenna operating in at least one designated band (for example, legacy band). For example, the at least one nonconductive portion 2161 and 2162 may include a segmented portion or a slit.

According to various embodiments, the first rear cover 214 and/or the second rear cover 224 may be made of, for example, at least one of coated or colored glass, ceramic, a polymer, or a metal (for example, aluminum, stainless steel (STS), or magnesium), or a combination of at least two thereof.

According to various embodiments, the flexible display 230 may be disposed so as to extend from the first surface 211 of the first housing 210 to at least a part of the third surface 221 of the second housing 220 across the hinge 240 (for example, the hinge 240 in FIG. 2B or FIG. 4). For example, the flexible display 230 may include a first planar area 230a substantially corresponding to the first surface 211, a second planar area 230b corresponding to the second surface 221, and a folding area 230c (for example, bending area) which connects the first planar area 230a and the second planar area 230b, and which corresponds to the hinge 240 (for example, the hinge 240 in FIG. 2B or FIG. 4).

According to an embodiment, the flexible display 230 may include an unbreakable (UB) type OLED display (for example, curved display). According to various embodiments, the flexible display 230 is not limited to the above-described example, and may also include a flat type display based on an on-cell touch (OCTA) active matrix organic light-emitting diode (AMOLED).

According to various embodiments, the flexible display 230 may be configured such that the first planar area 230a has a periphery (for example, outer surface) disposed on the inner surface of the first housing 210. The flexible display 230 may be configured such that the second planar area 230b has a periphery (for example, outer surface) disposed on the inner surface of the second housing 220. The flexible display 230 may have a protective cap (not illustrated) disposed in an area corresponding to the hinge 240 (for example, the hinge 240 in FIG. 2B or FIG. 4) so as to protect the periphery. The protective cap (not illustrated) may be used selectively according to the specification of the electronic device 200, or omitted.

According to various embodiments, the electronic device 200 may include a hinge housing 241 (for example, hinge cover). The hinge housing 241 may be disposed such that the same supports the hinge 240 (for example, the hinge 240 in FIG. 2B or FIG. 4) and, in a folded state of the electronic device 200, the same is exposed to the outside and, in an unfolded state thereof, the same is moved into a first space (for example, the inner space of the first housing 210) and a second space (for example, the inner space of the second housing 220) and thus is substantially invisible from the outside. For example, the flexible display 230 may be disposed to extend from at least a part of the second surface 212 to at least a part of the fourth surface 222. For example, the electronic device 200 may be folded such that the flexible display 230 is visually exposed to the outside (such an electronic device may be referred to as an out-folding type).

According to various embodiments, the electronic device 200 may include a sub-display 232 (for example, second display) disposed separately from the flexible display 230 (for example, first display). The sub-display 232 may be disposed on the second surface 212 of the first housing 210 to be at least partially visually exposed, thereby displaying state information of the flexible display 230 in the folded state of the electronic device 200. The sub-display 232 may be disposed so as to be visible from the outside through at least some areas of the first rear cover 214. For example, the sub-display 232 may be disposed on the fourth surface 222 of the second housing 220. In this case, the sub-display 232 may be disposed so as to be visible from the outside through at least some areas of the second rear cover 224.

According to various embodiments, the electronic device 200 may include at least one of an input module 203 (for example, microphone), sound output modules 201 and 202, a sensor module 204, camera modules 205 and 208, a key input device 206, or a connector port 207. In the illustrated embodiment, the input module 203 (for example, microphone), the sound output modules 201 and 202, the sensor module 204, the camera modules 205 and 208, the key input device 206, or the connector port 207 refers to a hole or shape formed in the first housing 210 or the second housing 220, but may be defined to include a substantial electronic component (for example, input module, sound output module, sensor module, or camera module) disposed inside the electronic device 200 and configured to operate through the hole or shape.

According to various embodiments, the input module 203 may include at least one microphone disposed on the second housing 220. For example, the input module 203 may include multiple microphones disposed such that the direction of sounds can be detected. For example, the multiple microphones may be disposed on the first housing 210 and/or the second housing 220 at designated locations. The input module 203 may include the input module 150 illustrated in FIG. 1.

According to various embodiments, the sound output modules 201 and 202 may include speakers. For example, the sound output modules 201 and 202 may include a speech receiver 201 disposed on the first housing 210 and a speaker 202 disposed on the second housing 220. The sound output modules 201 and 202 may include the sound output module 155 illustrated in FIG. 1. For example, the input module 203, the sound output modules 201 and 202, and the connector port 207 may be disposed in a space formed in the first housing 210 and/or the second housing 220 of the electronic device 200 and may be exposed to the outside through at least one hole formed in the first housing 210 and/or the second housing 220. The at least one connector port 207 may be used to transmit/receive power and/or data with an external electronic device (for example, the electronic devices 102 and 104 in FIG. 1A). The at least one connector port 207 may include the interface 177 and/or the connecting terminal 178 illustrated in FIG. 1. For example, the at least one connector port (for example, an ear jack hole) may contain a connector (for example, an ear jack) for transmitting/receiving audio signals with an external electronic device (for example, the electronic devices 102 and 104 in FIG. 1A). For example, holes formed in the first housing 210 and/or the second housing 220 may be commonly used for the input module 203 and the sound output modules 201 and 202. For example, the sound output modules 201 and 202 may include a speaker (for example, piezoelectric speaker) configured to operate while excluding the holes formed in the first housing 210 and/or the second housing 220.

According to various embodiments, the sensor module 204 (for example, the sensor module 176 in FIG. 1) may generate electric signals or data values corresponding to the internal operating status of the electronic device 200, or external environment states. The sensor module 204 may detect external environments through the first surface 211 of the first housing 210, for example. For example, the electronic device 200 may further include at least one sensor module disposed to detect external environments through the second surface 212 of the first housing 210. The sensor module 204 (for example, illuminance sensor) may be disposed under the flexible display 230 so as to detect external environments through the flexible display 230. According to various embodiments, the sensor module 204 may include at least one of a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, an illuminance sensor, a proximity sensor, or an ultrasonic sensor.

According to various embodiments, the camera modules 205 and 208 may include a first camera module 205 (for example, front camera device) disposed on the first surface 211 of the first housing 210 and a second camera module 208 disposed on the second surface 212 of the first housing 210. The electronic device 200 may further include a flash 209 disposed near the second camera module 208. The camera modules 205 and 208 may include one or multiple lenses, image sensors, and/or image signal processors. The flash 209 may include, for example, a light-emitting diode or a xenon lamp. The camera modules 205 and 208 may be disposed such that two or more lenses (for example, wide-angle lenses, ultra-wide-angle lenses, or telephoto lenses) and image sensors are positioned on one surface (for example, first surface 211, second surface 212, third surface 221, or fourth surface 222) of the foldable electronic device 200. The camera modules 205 and 208 may include the camera module 180 illustrated in FIG. 1. For example, the camera modules 205 and 208 may include lenses for time of flight (TOF) and/or image sensors.

According to various embodiments, the key input devices 206 (for example, key button) may be disposed on the third lateral surface 213c of the first lateral frame 213 of the first housing 210. For example, the key input devices 206 may be disposed on at least one of other lateral surfaces 213a and 213b of the first housing 210 and/or the lateral surfaces 223a, 223b, and 223c of the second housing 220. For example, the key input devices 206 may include a button for powering the electronic device 200 on or off. For example, the key input devices 206 may include a button for increasing or decreasing the volume of the electronic device 200. For example, the electronic device 200 may not include some or all of the key input devices 206, and key input devices 206 not included therein may be implemented in other types (for example, soft keys) on the flexible display 230. For example, the key input devices 206 may be implemented by using pressure sensors included in the flexible display 230.

According to various embodiments, some of the camera modules 205 and 208 (for example, the first camera module 205) or the sensor module 204 may be disposed to be exposed through the flexible display 230. For example, the first camera module 205 or the sensor module 204 may be disposed in the inner space of the electronic device 200 so as to contact external environments through an opening (for example, through-hole) formed at least partially in the flexible display 230. Some sensor module 204 may be disposed in the inner space of the electronic device 200 so as to perform designated functions without being exposed visually through the flexible display 230. In this case, the area of the flexible display 230, which faces the sensor module, may need no opening.

Referring to FIG. 3B, the electronic device 200 may operate so as to maintain an intermediate folding state through the hinge 240 (for example, the hinge 240 in FIG. 2B or FIG. 4). For example, the electronic device 200 may control the flexible display 230 such that the display area (for example, first planar area 230a) corresponding to the first surface 211 and the display area (for example, second planar area 230b) corresponding to the third surface 221 display different contents. The electronic device 200 may operate in a substantially unfolded state (for example, the unfolded state in FIG. 2A) and/or in a substantially folded state (for example, the folded state in FIG. 3A) with reference to a predetermined inflection angle (for example, the angle between the first housing 210 and the second housing 220 in the intermediate folding state) through the hinge 240. For example, the electronic device 200 may operate so as to reach an unfolded state (for example, the unfolded state in FIG. 2A) in case that a pressure is provided in the unfolding direction (for example, direction B) in a state in which the same is unfolded to a predetermined inflection angle through the hinge 240. For example, the electronic device 200 may operate so as to reach a folded state (for example, the folded state in FIG. 3A) in case that a pressure is provided in the folding direction (for example, direction C) in a state in which the same is unfolded to a predetermined inflection angle through the hinge 240. For example, the electronic device 200 may operate so as to maintain the folding or unfolding state at various angles through the hinge 240.

FIG. 4 is an exploded perspective view of an electronic device (for example, foldable electronic device) according to various embodiments of the disclosure.

Referring to FIG. 4, the electronic device 200 (for example, the electronic device 101 in FIG. 1) may include a first lateral frame 213 of a first housing 210, a second lateral frame 223 of a second housing 220, and a hinge 240 (for example, the hinge 240 in FIG. 2B) configured to rotatably connect the first lateral frame 213 and the second lateral frame 223. For example, the hinge 240 may include a hinge device, a hinge module, or a hinge assembly.

According to an embodiment, the electronic device 200 may include a first support plate 2131 at least partially coupled to the first lateral frame 213 of the first housing 210 and disposed inside the first housing 210, and a second support plate 2231 at least partially coupled to the second lateral frame 223 of the second housing 220 and disposed inside the second housing 220. The first support plate 2131 may be integrally formed with the first lateral frame 213 or structurally coupled to the first lateral frame 213. The second support plate 2231 may be integrally formed with the second lateral frame 223 or structurally coupled to the second lateral frame 223. For example, the flexible display 230 of the electronic device 200 may be disposed so as to be supported by the first support plate 2131 and the second support plate 2231.

According to an embodiment, the electronic device 200 may include a first rear cover 214 coupled to the first lateral frame 213 of the first housing 210 so as to provide a first space between the same and the first support plate 2131, and a second rear cover 224 coupled to the second lateral frame 223 of the second housing 220 so as to provide a second space between the same and the second support plate 2231. For example, the first lateral frame 213 and the first rear cover 214 may be formed integrally. For example, the second lateral frame 223 and the second rear cover 224 may be formed integrally.

According to an embodiment, the first housing 210 may include a first lateral frame 213, a first support plate 2131, and/or a first rear cover 214. For example, the second housing 220 may include a second lateral frame 223, a second support plate 2231, and/or a second rear cover 224. For example, the electronic device 200 may include a sub-display 232 disposed such that the same is visible from the outside through at least some areas of the first rear cover 214.

According to various embodiments, the electronic device 200 may include a first substrate assembly 261 (for example, first printed circuit board), a camera assembly 263, a first battery 271, and/or a first bracket 251, which are disposed in a first space between the first lateral frame 213 and the first rear cover 214.

According to an embodiment, the camera assembly 263 may include multiple camera modules (for example, the camera modules 205 and 208 in FIG. 2A and FIG. 3A). The camera assembly 263 may be electrically connected to the first substrate assembly 261 (for example, first printed circuit board). The first bracket 251 may provide a support structure for supporting the first substrate assembly 261 and/or the camera assembly 263.

According to an embodiment, the electronic device 200 may include a second substrate assembly 262 (for example, second printed circuit board), an antenna 290 (for example, coil member), a second battery 272, and/or a second bracket 252, which are disposed in a second space between the second lateral frame 223 and the second rear cover 224.

According to an embodiment, the electronic device 200 may include a wiring member 280 (for example, flexible printed circuit board (FPCB)) disposed to extend from the first substrate assembly 261, across the hinge 240, to the multiple electronic components (for example, the second substrate assembly 262 (for example, second printed circuit board), the second battery 272, or the antenna 290) disposed between the second lateral frame 223 and the second rear cover 224, thereby providing an electric connection.

According to an embodiment, the antenna 290 may include a near field communication (NFC) antenna, a wireless charging antenna, and/or a magnetic secure transmission (MST) antenna. For example, the NFC antenna may perform near field communication with external electronic devices (for example, the electronic devices 102 and 104 in FIG. 1A). For example, the wireless charging antenna may charge the electronic device 200 or wirelessly supply power to external electronic devices (for example, the electronic devices 102 and 104 in FIG. 1A). For example, the MST antenna may be used for electronic payment using the electronic device 200.

According to an embodiment, the electronic device 200 may include a hinge housing 241 (for example, hinge cover) disposed such that the same supports or covers the hinge 240 and, in a folded state (for example, the folded state in FIG. 3A) of the electronic device 200, the same is exposed to the outside and, in an unfolded state (for example, the unfolded state in FIG. 2A) thereof, the same is at least partially moved into the inner space of the first housing 210 and the second housing 220 and thus is invisible from the outside.

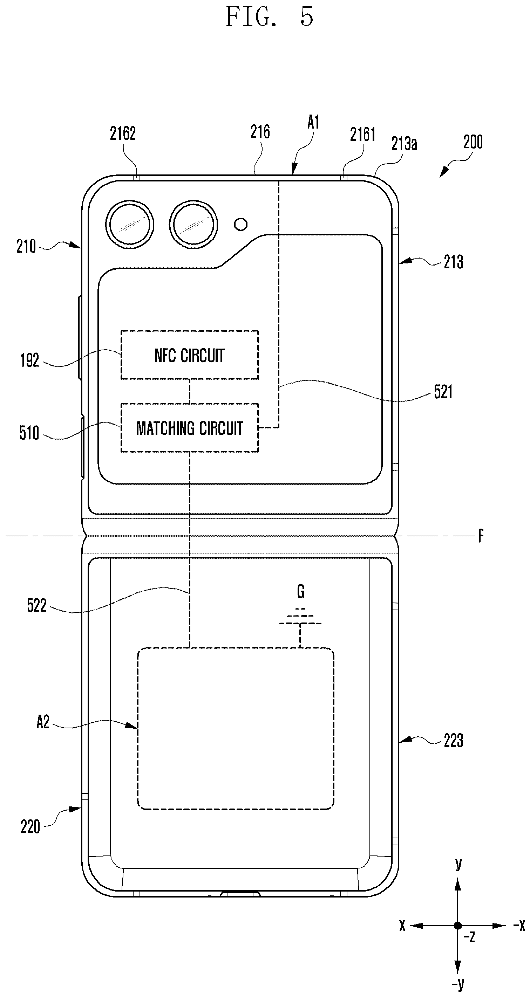

FIG. 5 schematically illustrates some components of an electronic device according to an embodiment of the disclosure.

According to various embodiments, the electronic device 200 disclosed hereinafter may include at least some embodiments of the electronic device 101 illustrated in FIG. 1A and/or the electronic device 200 illustrated in FIG. 2A to FIG. 4. In the following description of the electronic device 200, components substantially identical to those in the embodiments described above with reference to FIG. 1A to FIG. 4 may be given identical reference numerals, and repeated descriptions of functions thereof may be omitted herein.

According to an embodiment, the following embodiment of the electronic device 200 is described with reference to a foldable electronic device, for example, but is not limited thereto, and may be substantially equally applied to bar-type, rollable-type, multi-foldable-type, or sliding-type electronic devices.

According to an embodiment, an embodiment related to the electronic device 200 disclosed herein is described with regard to a foldable electronic device having a first housing 210 and a second housing 220 configured to fold and unfold in the longitudinal direction (for example, y-axis direction and -y-axis direction), but is not limited thereto, and may be equally applied to foldable electronic devices configured to fold and unfold in the transverse direction (for example, x-axis direction and -x-axis direction).

For example, FIG. 5 may schematically illustrate some components of an electronic device 200 according to an embodiment of the disclosure in an unfolded state.

Referring to FIG. 5, the electronic device 200 according to an embodiment of the disclosure may include a first housing 210, a second housing 220, a metal antenna A1 (for example, first antenna), a coil antenna A2 (for example, second antenna), an NFC circuit 192, and/or a matching circuit 510.

According to an embodiment, the first housing 210 may be at least partially coupled to the first side of the hinge 240. The first housing 210 may include a first nonconductive portion 2161 and a second nonconductive portion 2162 formed on the first lateral frame 213. For example, the first nonconductive portion 2161 and the second nonconductive portion 2162 may be formed on the first lateral surface 213a of the first lateral frame 213. For example, the first nonconductive portion 2161 may be formed on the first lateral surface 213a in the -x-axis direction. For example, the first nonconductive portion 2161 may include a first segmented portion or a first slot. For example, the second nonconductive portion 2162 may be formed on the first lateral surface 213a in the x-axis direction. For example, the second nonconductive portion 2162 may include a second segmented portion or a second slot.

According to an embodiment, the first housing 210 may include a conductive portion 216 disposed between the first nonconductive portion 2161 and the second nonconductive portion 2162. For example, the conductive portion 216 may be electrically connected to the NFC circuit 192 (for example, the wireless communication module in FIG. 1A). For example, the conductive portion 216 (for example, antenna radiator) may be electrically connected to the NFC circuit 192 through the matching circuit 510, and may operate as a metal antenna A1 (for example, first antenna). For example, the metal antenna A1 may include a conductive portion 216. For example, the metal antenna A1 may perform near field communication (NFC) with external electronic devices (for example, the external electronic devices 102 and 104 in FIG. 1A). For example, the metal antenna A1 may be electrically connected to the matching circuit 510 and/or the NFC circuit 192 through a first conductive path 521. For example, the first conductive path 521 may include a flexible printed circuit board (FPCB). For example, the metal antenna A1 disclosed hereinafter may be a first antenna. For example, the metal antenna A1 disclosed hereinafter may operate as a first antenna.

According to an embodiment, the second housing 220 may be at least partially coupled to the second side of the hinge 240. The second housing 220 may be configured such that the same can unfold from and fold onto the first housing 210 with reference to a folding axis F by using the hinge 240. The second housing 220 may include a coil antenna A2 (for example, second antenna) therein. For example, the coil antenna A2 may be disposed in the second lateral frame 223 of the second housing 220. For example, the coil antenna A2 may include the antenna 290 illustrated in FIG. 4. For example, the coil antenna A2 may include a coil pattern having a wire wound helically.

According to an embodiment, the coil antenna A2 may be electrically connected to the NFC circuit 192. For example, the coil antenna A2 may be electrically connected to the NFC circuit 192 through the matching circuit 510. For example, the coil antenna A2 may perform NFC with external electronic devices (for example, the external electronic devices 102 and 104 in FIG. 1A). For example, the coil antenna A2 may be electrically connected to the matching circuit 510 through a second conductive path 522. For example, the second conductive path 522 may include a flexible printed circuit board (FPCB). A part of the coil antenna A2 may be electrically connected to the ground G. For example, the coil antenna A2 disclosed hereinafter may be a second antenna. For example, the coil antenna A2 disclosed hereinafter may operate as a second antenna.

According to an embodiment, the NFC circuit 192 and the matching circuit 510 may be included in a first printed circuit board (for example, the first substrate assembly 261 in FIG. 4) disposed inside the first housing 210. According to various embodiments, the NFC circuit 192 and the matching circuit 510 may be included in a second printed circuit board (for example, the second substrate assembly 262 in FIG. 4) disposed inside the second housing 220.

According to an embodiment, the NFC circuit 192 may be electrically connected to the matching circuit 510. The NFC circuit 192 may transfer a voltage transferred through the battery 189 to the metal antenna A1 (for example, first antenna) and the coil antenna A2 (for example, second antenna). For example, the NFC circuit 192 may transfer a voltage transferred through the battery 189 to the metal antenna A1 and the coil antenna A2 through the matching circuit 510. For example, the NFC circuit 192 may transfer a voltage necessary for NFC and/or a feeding signal to the metal antenna A1 and the coil antenna A2 through the matching circuit 510. The NFC circuit 192 may include a radio frequency integrated circuit (RFIC). For example, the NFC circuit 192 may perform substantially the same function as the wireless communication module 192 illustrated in FIG. 1A, except for a difference in expression. For example, the NFC circuit 192 may perform NFC with external electronic devices (for example, the electronic devices 102 and 104 in FIG. 1A).

According to an embodiment, the matching circuit 510 may be electrically connected to the metal antenna A1 through the first conductive path 521. The matching circuit 510 may be electrically connected to the coil antenna A2 through the second conductive path 522. The matching circuit 510 may control the electric characteristics of at least one of the metal antenna A1 and the coil antenna A2. For example, the matching circuit 510 may control the parasitic resonance and current flow of at least one of the metal antenna A1 and the coil antenna A2. The matching circuit 510 may be electrically connected to the ground G. For example, the matching circuit 510 may apply a variable transmission voltage to the metal antenna A1 and/or the coil antenna A2. For example, the matching circuit 510 may transfer a first voltage to the metal antenna A1, based on the state of the electronic device 200, and may transfer a second voltage to the coil antenna A2. For example, the first voltage may be higher than the second voltage. For example, the second voltage may be higher than the first voltage. For example, the first voltage and the second voltage may be substantially identical. For example, the first voltage and the second voltage may variably change according to the control of the processor 120 and/or the NFC circuit 192. For example, the state of the electronic device 200 may include an unfolded state, a folded state, a grip state, the illuminance around the electronic device 200, and/or a case mounting state. For example, the matching circuit 510 may be electrically connected to a processor (for example, the processor 120 in FIG. 1A). For example, during operations of the metal antenna A1 and/or the coil antenna A2, the impedance of the matching circuit 510 may be adjusted according to the control of the processor 120 and/or the NFC circuit 192.

According to various embodiments, the NFC circuit 192 may transfer a voltage necessary for NFC and/or a feeding signal to the metal antenna A1 (for example, first antenna) and the coil antenna A2 (for example, second antenna) without going through the matching circuit 510. For example, the NFC circuit 192 may be electrically connected to the metal antenna A1 through the first conductive path 521, and may be electrically connected to the coil antenna A2 through the second conductive path 522. For example, the matching circuit 510 may be omitted. The NFC circuit 192 may apply a variable transmission voltage to the metal antenna A1 and/or the coil antenna A2. For example, the expression "transfer" used herein may include the meaning of sending, transmission and/or application.

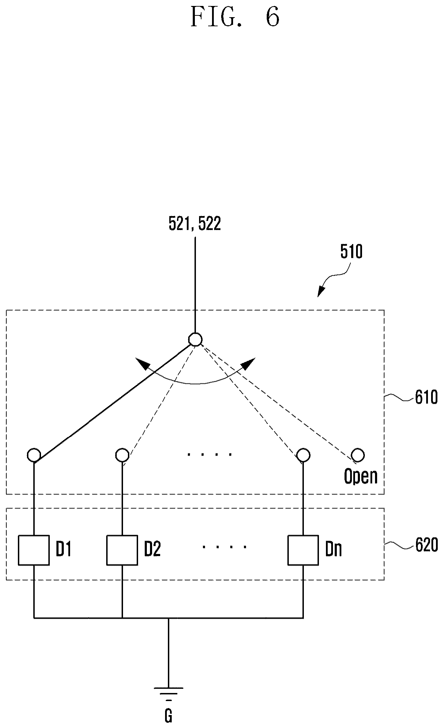

According to an embodiment, the matching circuit 510 may include at least one switch (for example, the switch 610 in FIG. 6) and/or at least one lumped element (for example, the lumped element 620 in FIG. 6). For example, the lumped element (for example, passive element) may include a resistor, a capacitor, and/or an inductor. For example, the matching circuit 510 may change the connection between the metal antenna A1 and/or the coil antenna A2 and the ground G by using the at least one switch and the at least one lumped element. For example, the matching circuit 510 may be configured to electrically connect or electrically disconnect the metal antenna A1 and/or the coil antenna A2 and the ground G according to the control of the processor 120 and/or the NFC circuit 192. For example, during operations of the metal antenna A1 and/or the coil antenna A2, the matching circuit 510 may adjust the impedance transferred to the metal antenna A1 and/or the coil antenna A2 according to the control of the processor 120 and/or the NFC circuit 192.

FIG. 6 schematically illustrates the configuration of a matching circuit according to an embodiment of the disclosure.

Referring to FIG. 6, the matching circuit 510 may include at least one switch 610 and/or at least one lumped element 620 (D1, D2, Dn, open). The matching circuit 510 may be electrically connected to the first conductive path 521 and the second conductive path 522. For example, the at least one lumped element 620 (for example, passive element) may have a different element value. For example, the at least one lumped element 620 may include resistors having various resistance values, capacitors having various capacitance values, and/or inductors having various inductance values. The matching circuit 510 may transfer a first voltage to the metal antenna A1 (for example, first antenna) through the first conductive path 521 and may transfer a second voltage to the coil antenna A2 (for example, second antenna) through the second conductive path 522 by using the at least one switch 610 and the at least one lumped element 620 according to the control of the processor 120 and/or the NFC circuit 192. For example, the matching circuit 510 may transfer a variable transmission voltage to the metal antenna A1 and/or the coil antenna A2 by using the at least one switch 610 and the at least one lumped element 620.

According to an embodiment, the at least one switch 610 may include a micro-electro mechanical systems (MEMS) switch. The MEMS switch performs mechanical switching operations by means of internal metal plates and thus has complete turn on/off characteristics, thereby having substantially no influence on changes in radiation characteristics of the metal antenna A1 and/or the coil antenna A2. For example, the at least one switch 610 may include a single-pole single-throw (SPST) switch, a single-pole double-throw (SPDT) switch, or a switch including three or more throws.

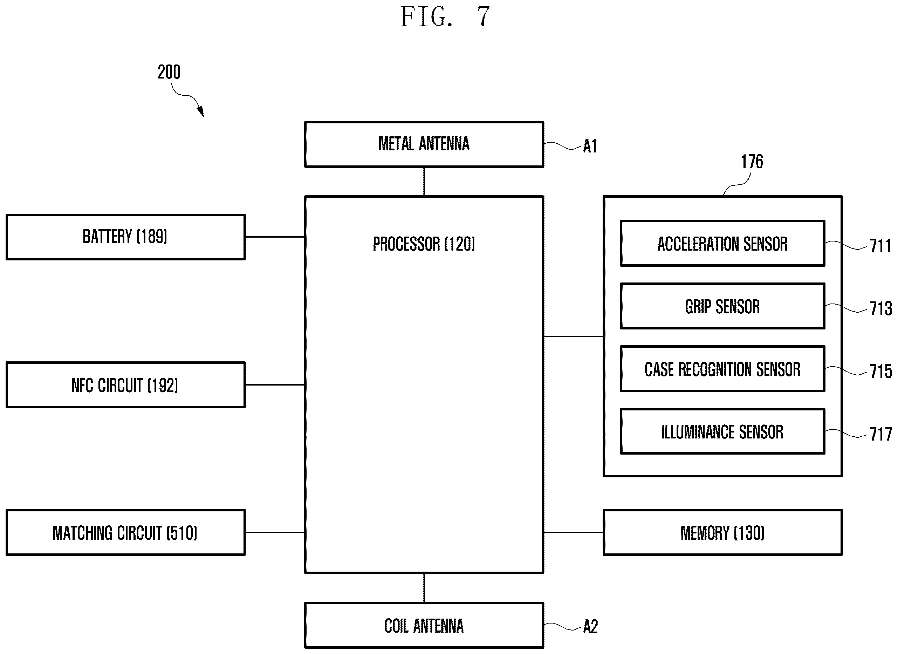

FIG. 7 schematically illustrates the configuration of an electronic device according to an embodiment of the disclosure.

Referring to FIG. 7, the electronic device 200 according to an embodiment may include a battery 189, an NFC circuit 192, a matching circuit 510, a metal antenna A1, a coil antenna A2, a sensor module 176, a memory 130, and/or a processor 120.

According to an embodiment, the battery 189, the NFC circuit 192, the matching circuit 510, the metal antenna A1, the coil antenna A2, the sensor module 176, the memory 130, and the processor 120 may be connected electrically or operatively.

According to an embodiment, the battery 189 may supply power to at least one component included in the electronic device 200.

According to an embodiment, the NFC circuit 192 may be electrically connected to the metal antenna A1 (for example, first antenna) through a first conductive path 521. The NFC circuit 192 may be electrically connected to the coil antenna A2 (for example, second antenna) through a second conductive path 522. The NFC circuit 192 may transfer a voltage and/or a radio frequency signal to the metal antenna A1 and/or the coil antenna A2. For example, the NFC circuit 192 may transfer a first voltage to the metal antenna A1 and may transfer a second voltage to the coil antenna A2 according to the control of the processor 120. For example, the first voltage and the second voltage may be variably adjusted according to the control of the processor 120 and/or the NFC circuit 192. For example, one or more NFC circuits 192 may be disposed on a first printed circuit board (for example, the first substrate assembly 261 in FIG. 4). For example, one or more NFC circuits 192 may be disposed on a second printed circuit board (for example, the second substrate assembly 262 in FIG. 4).

According to an embodiment, the matching circuit 510 may be electrically connected to the metal antenna A1 through the first conductive path 521. The matching circuit 510 may be electrically connected to the coil antenna A2 through the second conductive path 522. The matching circuit 510 may operate according to the control of the processor 120 and/or the NFC circuit 192. The matching circuit 510 may control electric characteristics of the metal antenna A1 and/or the coil antenna A2. For example, the matching circuit 510 may vary (for example, about 1.5V to 5.8V) the first voltage transferred to the metal antenna A1 and/or the second voltage transferred to the coil antenna A2 through the processor 120 and/or the NFC circuit 192. For example, the matching circuit 510 may control the current flow of the metal antenna A1 and/or the coil antenna A2.

According to an embodiment, the metal antenna A1 may be disposed on a first housing 210. For example, the metal antenna A1 may include a conductive portion 216 formed on the first housing 210. The coil antenna A2 may be disposed on a second housing 220. The metal antenna A1 and the coil antenna A2 may operate selectively according to the state of the electronic device 200 (for example, an unfolded state, a folded state, a grip state, the state of illuminance around the electronic device 200, and/or whether a case is mounted or not). For example, based on the state of the electronic device 200, the first voltage transferred to the metal antenna A1 and/or the second voltage transferred to the coil antenna A2 may be variably adjusted through the NFC circuit 192 and/or the matching circuit 510.

According to an embodiment, the sensor module 176 may detect whether the electronic device 200 is in an unfolded state or in a folded state. The sensor module 176 may detect the grip state (for example, grip signal) of the first housing 210 and the second housing 220 of the electronic device 200. The sensor module 176 may detect whether a case (for example, light-emitting diode (LED) suitcase) is mounted on the first housing 210 and/or the second housing 220 of the electronic device 200. The sensor module 176 may detect the illuminance around the electronic device 200. For example, the sensor module 176 may include an acceleration sensor 711, a grip sensor 713, a case recognition sensor 715, and/or an illuminance sensor 717. Signals or information detected through the sensor module 176 may be transferred to the processor 120.

According to an embodiment, the acceleration sensor 711 may detect the unfolded state and/or foldedstate of the electronic device 200. For example, the acceleration sensor 711 may detect the angle (for example, unfolding angle and folding angle) between the first housing 210 and the second housing 220. For example, in case that the first housing 210 and the second housing 220 are unfolded or folded through the hinge 240, the acceleration sensor 711 may detect the angle between the first housing 210 and the second housing 220. For example, the acceleration sensor 711 may include a six-axis sensor, a Hall sensor, an angular velocity sensor, and/or a gyro sensor.

According to an embodiment, the grip sensor 713 may be disposed on the first housing 210 and/or the second housing 220. The grip sensor 713 may detect whether the user of the electronic device 200 has gripped at least a part of the first housing 210 and/or the second housing 220 by using his/her hands (for example, palms and/or fingers).

According to an embodiment, the case recognition sensor 715 may detect whether a case (for example, LED suitcase) is mounted on the first housing 210 and/or the second housing 220. For example, the case recognition sensor 715 may detect whether a case (for example, cover) has been mounted on the back surface (for example, -z-axis direction) of the second housing 220. For example, the case recognition sensor 715 may include one of a proximity sensor, a touch sensor, and a pressure sensor.

According to an embodiment, the illuminance sensor 717 may detect the illuminance (for example, brightness) around the electronic device 200. The illuminance may be the amount of light, or electromagnetic radiation in the visible spectrum, falling on all or part of the electronic device 200. The illuminance may be the amount of light, or electromagnetic radiation in the visible spectrum, falling on the illuminance sensor 717. Based on the illuminance around the electronic device 200 detected through the illuminance sensor 717, the processor 120 may variably control the second voltage of the coil antenna A2, for example. A case fitted to the electronic device 200 may comprise at least one light source, such as an LED, which is arranged to illuminate in response to signals from the coil antenna A2. For example the case may comprise a further antenna which is connected to the light source. Varying the second voltage of the coil antenna A2 may thereby adjust the amount of light emitted from the light source of the case. As such, the electronic device may control the brightness of an case comprising a light source such as an LED case in response to an illuminance detected by the illuminance sensor 717.

According to an embodiment, the memory 130 may store at least one parameter that may be used to control the processor 120 and/or the NFC circuit 192. For example, the memory 130 may store a parameter that may be used to vary (for example, about 1.5V to 5.8V) the first voltage transferred to the metal antenna A1 (for example, first antenna) and/or the second voltage transferred to the coil antenna A2 (for example, second antenna) through the NFC circuit 192. For example, the memory 130 may store a parameter that may be used to variably adjust the first voltage transferred to the metal antenna A1 and the second voltage transferred to the coil antenna A2 through the NFC circuit 192 and/or the matching circuit 510 according to the state of the electronic device 200 (for example, an unfolded state, a folded state, a grip state, the state of illuminance around the electronic device 200, and/or whether a case is mounted or not).

According to various embodiments, the memory 130 may store the initial screen of the electronic device 200, configuration screens, and/or various applications provided through a main display 230 (for example, first display) and/or a sub-display 232 (for example, second display). The memory 130 may store a user interface (UI) such that various services can be provided to the user of the electronic device 200. The memory 130 may perform a function of storing programs (for example, the program 140 in FIG. 1A) for processing and control by the processor 120, operating systems (for example, the operating system 142 in FIG. 1A), various applications, and input/output data. The memory 130 may store a program for controlling overall operations of the electronic device 200. The memory 130 may store various pieces of configuration information necessary during function processing by the electronic device 200. The memory 130 may store at least one executable instruction. For example, the memory 130 may store at least one instruction which, when executed by the processor 120, causes the electronic device 200 to perform at least one operation. For example, the at least one instruction may be stored in a computer-readable recording medium. The recording medium may be tangible and non-transitory. The memory 130 and/or recording medium may store one or more programs including at least one instruction.

According to an embodiment, the processor 120 may be electrically or operatively connected to the battery 189, the NFC circuit 192, the matching circuit 510, the metal antenna A1, the coil antenna A2, the sensor module 176, and the memory 130. The processor 120 may control the functions and operations of the battery 189, the NFC circuit 192, the matching circuit 510, the metal antenna A1, the coil antenna A2, the sensor module 176, and the memory 130. The processor 120 may be configured to access the memory 130 and execute at least one instruction. The electronic device 200 may include at least one processor 120.

According to various embodiments, the processor 120 may perform functions of controlling overall operations of the electronic device 200 and the flow of signals between internal components thereof, and processing data. The processor 120 may include, for example, a central processing unit (CPU), an application processor, and/or a communication processor. The processor 120 may include a single-core processor or a multi-core processor. The processor 120 may be configured by at least one processor. For example, the processor 120 may include an application processor (for example, the main processor 121 in FIG. 1A) and a sensor hub processor (for example, the auxiliary processor 123 in FIG. 1A). For example, the sensor hub processor may be operatively connected to the sensor module 176, and may transfer information detected and/or sensed through the sensor module 176 to the application processor.

According to various embodiments, operations executed in the electronic device 200 may be performed and/or executed by the processor 120 and/or at least one instruction stored in the memory 130. For example, the description that the electronic device 200 may perform a specific operation in an embodiment of the disclosure may mean that the same is performed by the processor 120 and/or at least one instruction stored in the memory 130.

According to an embodiment, the processor 120 may be configured such that, based on state information of the electronic device 200 detected through the sensor module 176, the NFC circuit 192 transfers a first voltage to the metal antenna A1 (for example, first antenna) and transfers a second voltage to the coil antenna A2 (for example, second antenna). For example, the processor 120 may variably control the first voltage and second voltage transferred through the NFC circuit 192.

According to an embodiment, in case that the first housing 210 and the second housing 220 of the electronic device 200 are in an unfolded state, the processor 120 may control the NFC circuit 192 such that a first voltage, which is higher than a second voltage transferred to the coil antenna A2, is transferred to the metal antenna A1.

According to an embodiment, in case that the first housing 210 and the second housing 220 of the electronic device 200 are in an unfolded state, and in case that a grip signal is detected from the second housing 220, the processor 120 may control the NFC circuit 192 such that a first voltage, which is higher than a second voltage transferred to the coil antenna A2, is transferred to the metal antenna A1.

According to an embodiment, in case that the first housing 210 and the second housing 220 of the electronic device 200 are in a folded state, the processor 120 may control the NFC circuit 192 such that a second voltage, which is higher than a first voltage transferred to the metal antenna A1, is transferred to the coil antenna A2.

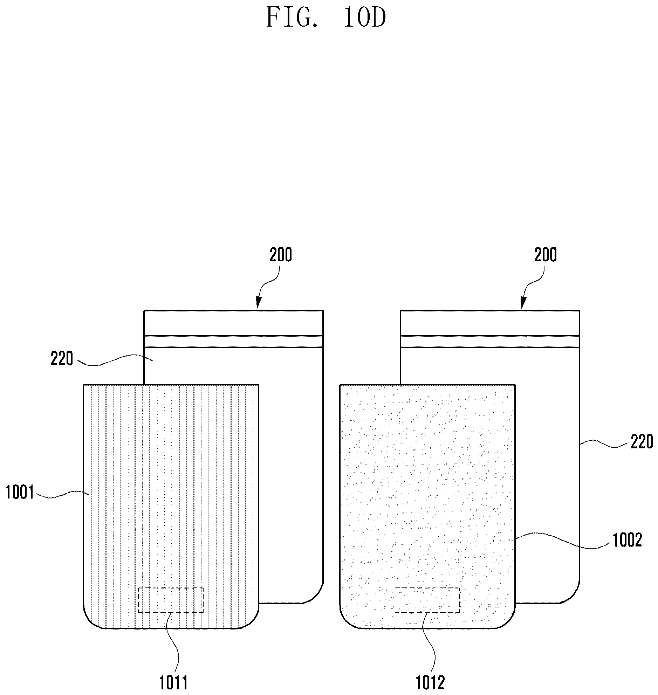

According to an embodiment, in case that a first LED case (for example, the first LED case 1001 in FIG. 10D) or a second LED case (for example, the second LED case 1002 in FIG. 10D) is mounted on the second housing 220 of the electronic device 200, the processor 120 may control the NFC circuit 192 such that a second voltage, which is higher than a first voltage transferred to the metal antenna A1, is transferred to the coil antenna A2. For example, the first LED case (for example, the first LED case 1001 in FIG. 10D) may include a first identifier (ID). For example, the second LED case (for example, the second LED case 1002 in FIG. 10D) may include a second ID different from the first ID.

According to an embodiment, in case that the first LED case 1001 including the first ID is mounted on the second housing 220 of the electronic device 200, the processor 120 may control the NFC circuit 192 such that the voltage corresponding to the first ID is transferred to the coil antenna A2.

According to an embodiment, in case that the second LED case 1002 including the second ID is mounted on the second housing 220 of the electronic device 200, the processor 120 may control the NFC circuit 192 such that the voltage corresponding to the second ID is transferred to the coil antenna A2. For example, the first LED case 1001 may include a (1-1)^{th} NFC chip (for example, the (1-1)^{th} NFC chip 1011 in FIG. 10D) corresponding to the first ID, and the second LED case 1002 may include a (1-2)^{th} NFC chip (for example, the (1-2)^{th} NFC chip 1012 in FIG. 10D) corresponding to the second ID.

According to an embodiment, the processor 120 may variably control the second voltage transferred from the NFC circuit 192 to the coil antenna A2, based on the illuminance around the electronic device 200 detected by using the sensor module 176 (for example, illuminance sensor 717), thereby adjusting the amount of light emitted from the first LED case 1001 or the second LED case 1002.

According to an embodiment, in case that the electronic device 200 is used in a reader mode (for example, POS function), the processor 120 may control the NFC circuit 192 such that a second voltage, which is higher than a first voltage transferred to the metal antenna A1, is transferred to the coil antenna A2.

According to an embodiment, the processor 120 may control the NFC circuit 192 such that a first voltage, which is higher than a second voltage transferred to the coil antenna A2, is transferred to the metal antenna A1, based on a state in which the second housing 220 is gripped, detected through the grip sensor 713. For example, in case that a grip signal is detected from the second housing 220 of the electronic device 200, the processor 120 may control the NFC circuit 192 such that a first voltage, which is higher than a second voltage transferred to the coil antenna A2, is transferred to the metal antenna A1.

According to an embodiment, the processor 120 may control the NFC circuit 192 such that a first voltage, which is higher than a second voltage transferred to the coil antenna A2, is transferred to the metal antenna A1, based on an unfolded state of the first housing 210 and the second housing 220 of the electronic device 200, and a state in which the second housing 220 is gripped.

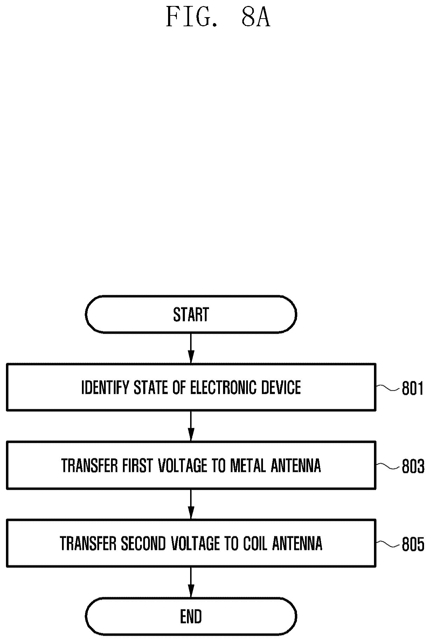

FIG. 8A is a flowchart schematically illustrating a method for variably controlling voltages, based on the state of an electronic device according to an embodiment of the disclosure.

In the following description of the flowchart, respective operations may be executed successively, but may not necessarily be executed successively. For example, the order of respective operations may be changed, and at least one operation may be executed in parallel. For example, embodiments related to the method disclosed hereinafter may be executed respectively, or merged with each other and then executed. For example, the embodiments described above with reference to FIG. 1A to FIG. 7 may be substantially identically applied and integrated to the embodiment of the flowchart described hereinafter. For example, operations of the flowchart described hereinafter may be executed by the processor 120 and/or at least one instruction stored in the memory 130.

In operation 801, the processor 120 may identify the state of the electronic device 200 by using the sensor module 176 (for example, acceleration sensor 711).

According to an embodiment, the processor 120 may identify whether the first housing 210 and the second housing 220 is in an unfolded state or in a folded state. For example, the sensor module 176 may identify the unfolded state or folded state of the electronic device 200 by using at least one of an acceleration sensor 711, a six-axis sensor, a Hall sensor, a gyro sensor, and an angular velocity sensor.

In operation 803, the processor 120 may transfer a first voltage to the metal antenna A1, based on the state (for example, unfolded state, folded state, and/or grip state) of the electronic device 200 detected through the sensor module 176.

In operation 805, the processor 120 may transfer a second voltage to the coil antenna A2, based on the state (for example, unfolded state, folded state, and/or grip state) of the electronic device 200 detected through the sensor module 176.

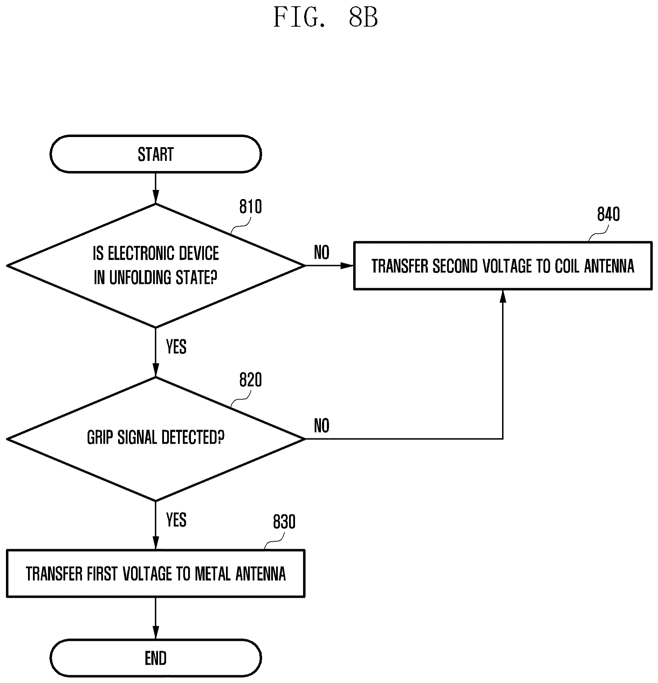

FIG. 8B is a flowchart schematically illustrating a method for variably controlling voltages according to the unfolded state and folded state of an electronic device according to an embodiment of the disclosure.

In the following description of the flowchart, respective operations may be executed successively, but may not necessarily be executed successively. For example, the order of respective operations may be changed, and at least one operation may be executed in parallel. For example, embodiments related to the method disclosed hereinafter may be executed respectively, or merged with each other and then executed. For example, the embodiments described above with reference to FIG. 1A to FIG. 8A may be substantially identically applied and integrated to the embodiment of the flowchart described hereinafter. For example, the embodiment illustrated in FIG. 8B may be substantially identically applied and integrated to the embodiment illustrated in FIG. 8A. For example, operations of the flowchart described hereinafter may be executed by the processor 120 and/or at least one instruction stored in the memory 130.

In operation 810, the electronic device 200 (for example, processor 120) may identify whether the first housing 210 and the second housing 220 are in an unfolded state or in a folded state by using the sensor module 176 (for example, acceleration sensor 711).

According to an embodiment, the sensor module 176 may identify the unfolded state or folded state of the electronic device 200 by using at least one of an acceleration sensor 711, a six-axis sensor, a Hall sensor, a gyro sensor, and an angular velocity sensor.

In operation 820, in case that the electronic device 200 is in an unfolded state, the processor 120 may identify whether a grip signal is detected from the second housing 220.

According to an embodiment, the processor 120 may identify whether the user has gripped the second housing 220, by using the sensor module 176 (for example, grip sensor 713).

In operation 830, in case that a grip signal is detected from the second housing 220 of the electronic device 200, the processor 120 may transfer a first voltage to the metal antenna A1 disposed on the first housing 210.

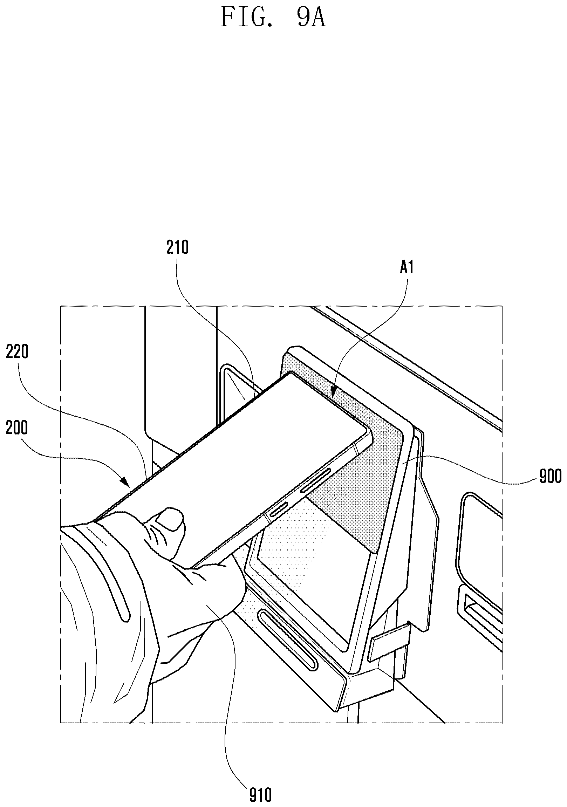

According to an embodiment, in case that the electronic device 200 is in an unfolded state, and in case that a grip signal is detected from the second housing 220, the metal antenna A1 may be mainly used to tag a point of sale (POS) device (for example, the POS device 900 in FIG. 9A). For example, in case that the electronic device 200 is in an unfolded state, and in case that a grip signal is detected from the second housing 220, the NFC performance of the metal antenna A1 may be superior to that of the coil antenna A2. For example, in case that the electronic device 200 is in an unfolded state, and in case that a grip signal is detected from the second housing 220, the first voltage transferred to the metal antenna A1 may include a higher voltage value than the second voltage transferred to the coil antenna A2.

In operation 840, in case that the first housing 210 and the second housing 220 of the electronic device 200 are in a folded state, the processor 120 may transfer a second voltage to the coil antenna A2. According to an embodiment, in case that no grip signal is detected from the second housing 220 by using the grip sensor 713, the processor 120 may transfer a second voltage to the coil antenna A2.

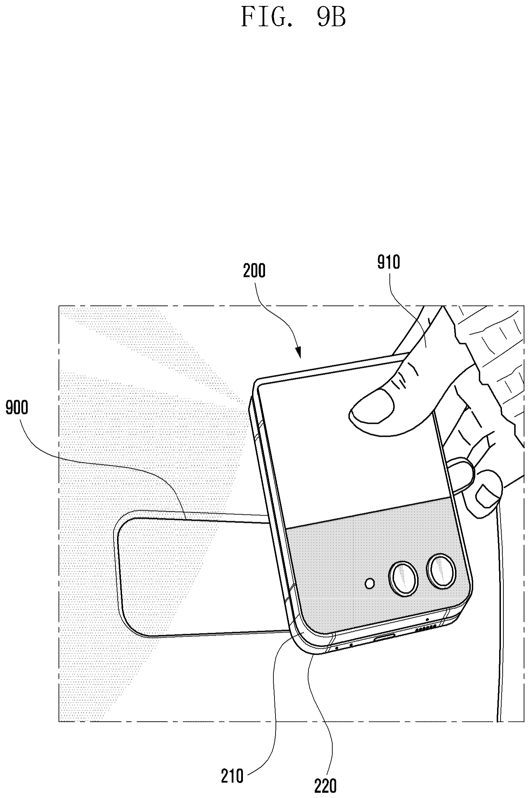

According to an embodiment, in case that the electronic device 200 is in a folded state, and in case that no grip signal is detected from the second housing 220, the coil antenna A2 may be mainly used to tag a POS device (for example, the POS device 900 in FIG. 9B). For example, in case that the electronic device 200 is in a folded state, and in case that no grip signal is detected from the second housing 220, the NFC performance of the coil antenna A2 may be superior to that of the metal antenna A1. For example, in case that the electronic device 200 is in a folded state, and in case that no grip signal is detected from the second housing 220, the second voltage transferred to the coil antenna A2 may include a higher voltage value than the first voltage transferred to the metal antenna A1.

According to an embodiment, the first voltage transferred to the metal antenna A1 in case that the processor 120 detects an unfolded state of the electronic device 200 and a grip signal may be higher than the second voltage transferred to the coil antenna A2 in case that the electronic device 200 is in a folded state, and in case that no grip signal is detected.

According to an embodiment, the second voltage transferred to the coil antenna A2 in case that the processor 120 detects a folded state of the electronic device 200 and detects no grip signal from the second housing 220 may be higher than the first voltage transferred to the metal antenna A1 in case that the electronic device 200 is in an unfolded state, and in case that a grip signal is detected.

According to an embodiment, the processor 120 may control the NFC circuit 192 such that, in case that the first housing 210 and the second housing 220 of the electronic device 200 are in an unfolded state, and in case that a grip signal is detected from the second housing 220, a first voltage, which is higher than a second voltage transferred to the coil antenna A2, is transferred to the metal antenna A1.

According to an embodiment, the processor 120 may control the NFC circuit 192 such that, in case that the first housing 210 and the second housing 220 of the electronic device 200 are in a folded state, and in case that no grip signal is detected from the second housing 220, a second voltage, which is higher than a first voltage transferred to the metal antenna A1, is transferred to the coil antenna A2.

FIG. 9A schematically illustrates a use state in which a metal antenna is used to tag a POS device in an unfolded state of an electronic device according to an embodiment of the disclosure. FIG. 9B schematically illustrates a use state in which a coil antenna is used to tag a POS device in a folded state of an electronic device according to an embodiment of the disclosure.

Referring to FIG. 9A, in case that the first housing 210 and the second housing 220 of the electronic device 200 are in an unfolded state, and in case that the user grips the periphery (for example, lateral surface) of the second housing 220 with his/her hand 910 (for example, fingers), the metal antenna A1 disposed on the first housing 210 may be used to tag the POS device 900.

According to an embodiment, in case that the electronic device 200 is in an unfolded state, and in case that a grip signal is detected from the second housing 220, the first voltage transferred from the NFC circuit 129 to the metal antenna A1 (for example, first antenna) is higher than the second voltage transferred to the coil antenna A2 (for example, second antenna), and the NFC performance of the metal antenna A1 may thus be superior to that of the coil antenna A2.

According to various embodiments, in case that the electronic device 200 is in an unfolded state, and in case that a grip signal is detected from the first housing 210, the second voltage transferred from the NFC circuit 129 to the coil antenna A2 (for example, second antenna) is higher than the first voltage transferred to the metal antenna A1 (for example, first antenna), and the NFC performance of the coil antenna A2 may thus be superior to that of the metal antenna A1.

According to various embodiments, in case that the first housing 210 and the second housing 220 of the electronic device 200 are in an unfolded state, and in case that the user grips lateral surfaces (for example, the second lateral surface 213b and the third lateral surface 213c in FIG. 2A) of the first housing 210 and/or lateral surfaces (for example, the fifth lateral surface 223b and the sixth lateral surface 223c in FIG. 2A) of the second housing 220 with his/her hand 910 (for example, fingers), the coil antenna A2 (for example, second antenna) may be used to tag the POS device 900.

According to various embodiments, the metal antenna A1 (for example, first antenna) or the coil antenna A2 (for example, second antenna) may be used selectively or used simultaneously according to the position and/or manner in which the first housing 210 and/or the second housing 220 are gripped.

Referring to FIG. 9B, in case that the first housing 210 and the second housing 220 of the electronic device 200 are in a folded state, and in case that the user does not grip lateral surfaces (for example, the fifth lateral surface 223b and the sixth lateral surface 223c in FIG. 2A) of the second housing 220 with his/her hand 910 (for example, fingers), the coil antenna A2 disposed on the second housing 220 may be used to tag the POS device 900.

According to various embodiments, in case that the first housing 210 and the second housing 220 of the electronic device 200 are in a folded state, and in case that no grip signal is detected from the second housing 220, the second voltage transferred from the NFC circuit 129 to the coil antenna A2 (for example, second antenna) is higher than the first voltage transferred to the metal antenna A1 (for example, first antenna), and the NFC performance of the coil antenna A2 may thus be superior to that of the metal antenna A1.

According to various embodiments, the processor 120 and/or the NFC circuit 192 may variably control the first voltage transferred to the metal antenna A1 (for example, first antenna) and the second voltage transferred from to the coil antenna A2 (for example, second antenna), based on the state (for example, unfolded state, folded state, and/or grip state) of the electronic device 200.

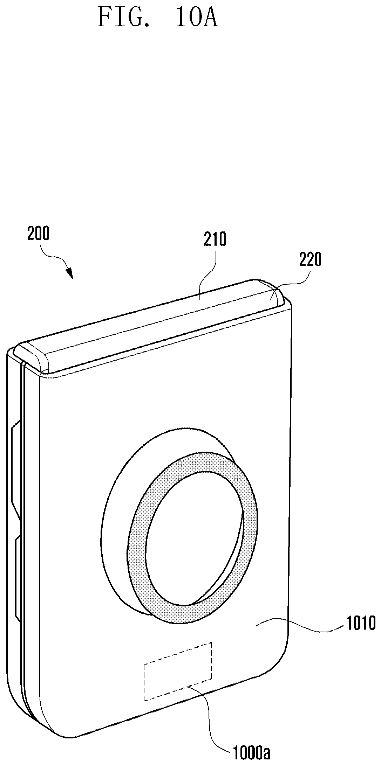

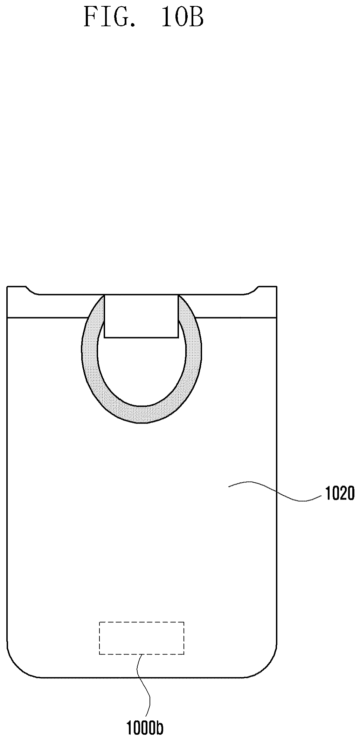

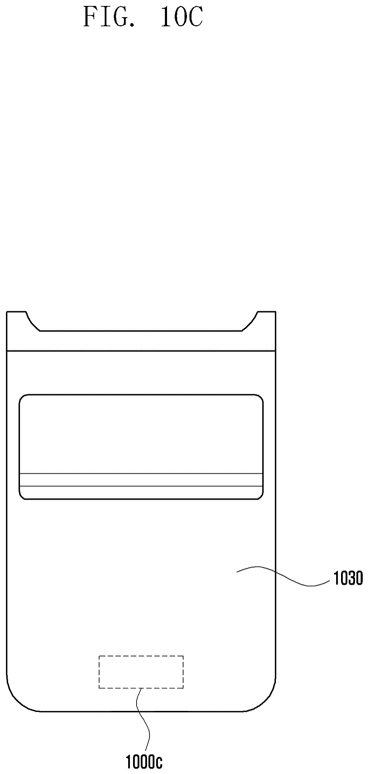

FIG. 10A schematically illustrates a first case mounted on an electronic device according to an embodiment of the disclosure. FIG. 10B schematically illustrates a second case mounted on an electronic device according to an embodiment of the disclosure. FIG. 10C schematically illustrates a third case mounted on an electronic device according to an embodiment of the disclosure. FIG. 10D schematically illustrates a first LED case and a second LED case mounted on an electronic device according to an embodiment of the disclosure.

Referring to FIG. 10A, a first case 1010 may be mounted on the second housing 220 of the electronic device 200. For example, the first case 1010 may be detachably mounted on the back surface (for example, the fourth surface 444 or the second rear cover 224 in FIG. 2C) of the second housing 220. For example, the first case 1010 may have a first thickness. For example, the first case 1010 may include a first NFC chip 1000a which the electronic device 200 may identify by using the sensor module 176 (for example, case recognition sensor 715). For example, the first NFC chip 1000a may include an ID which may be identified through the case recognition sensor 715.

According to an embodiment, in case of identifying that the first case 1010 is mounted on the second housing 220 by using the sensor module 176 (for example, case recognition sensor 715), the processor 120 may transfer a second voltage corresponding to the first NFC chip 1000a and/or the first thickness of the first case 1010 to the coil antenna A2 (for example, second antenna). For example, in case that the electronic device 200 operates in a reader mode (for example, POS function), the processor 120 may transfer (for example, apply) a second voltage (for example, about 3.6V to 4.4V) which is higher than a reference voltage (for example, about 3.3V) to the coil antenna A2 in order to compensate for the first thickness of the first case 1010. For example, in case that a second voltage (for example, about 4.4V) which is higher than the reference voltage (for example, about 3.3V) is transferred to the coil antenna A2, the NFC performance of the coil antenna A2 may be improved.

According to various embodiments, the first case 1010 may include no first NFC chip 1000a. For example, the first case 1010 may include a case thicker than a first thickness (for example, designated thickness). For example, in case of identifying that a case thicker than the designated thickness is mounted on the second housing 220 by using the sensor module 176 (for example, case recognition sensor 715), the processor 120 may display a user interface (for example, notification) on the sub-display 232 (for example, second display) such that the user is guided to tag the POS device (for example, the POS device 900 in FIG. 9B) by using the metal antenna A1 (for example, first antenna) instead of the coil antenna A2 (for example, second antenna).

According to various embodiments, in case of identifying that the first case 1010 is mounted on the second housing 220 by using the sensor module 176 (for example, case recognition sensor 715), the processor 120 may transfer a second voltage (for example, about 3.6V to 4.4V) to the coil antenna A2 (for example, second antenna) and may transfer a first voltage (for example, about 3.6V to 4.4V) which is substantially identical to the second voltage (for example, about 3.6V to 4.4V) to the metal antenna A1 (for example, first antenna). According to various embodiments, even if the first case 1010 is not mounted on the second housing 220, the processor 120 may apply substantially the same voltage to the metal antenna A1 (for example, first antenna) and the coil antenna A2 (for example, second antenna).

Referring to FIG. 10B, a second case 1020 may be mounted on the second housing 220 of the electronic device 200. For example, the second case 1020 may be detachably mounted on the back surface (for example, the fourth surface 444 or the second rear cover 224 in FIG. 2C) of the second housing 220. For example, the second case 1020 may have a second thickness. For example, the second thickness may be smaller than the first thickness of the first case 1010 described above. For example, the second case 1020 may include a second NFC chip 1000b which the electronic device 200 may identify by using the case recognition sensor 715. For example, the second NFC chip 1000b may include an ID which may be identified through the case recognition sensor 715.

According to an embodiment, in case of identifying that the second case 1020 is mounted on the second housing 220 by using the sensor module 176 (for example, case recognition sensor 715), the processor 120 may transfer a second voltage corresponding to the second NFC chip 1000b and/or the second thickness of the second case 1020 to the coil antenna A2. For example, in case that the electronic device 200 operates in a reader mode (for example, POS function), the processor 120 may transfer a second voltage (for example, about 4.0V) which is higher than a reference voltage (for example, about 3.3V) to the coil antenna A2 in order to compensate for the second thickness of the second case 1020. For example, in case that a second voltage (for example, about 4V) which is higher than the reference voltage (for example, about 3.3V) is transferred to the coil antenna A2, the NFC performance of the coil antenna A2 may be improved.

According to various embodiments, the second case 1020 may include no second NFC chip 1000b. For example, the second case 1020 may include a case thicker than a second thickness (for example, designated thickness). For example, in case of identifying that a case thicker than the designated thickness is mounted on the second housing 220 by using the sensor module 176 (for example, case recognition sensor 715), the processor 120 may display a user interface (for example, notification) on the sub-display 232 (for example, second display) such that the user is guided to tag the POS device (for example, the POS device 900 in FIG. 9B) by using the metal antenna A1 (for example, first antenna) instead of the coil antenna A2 (for example, second antenna).

According to various embodiments, in case of identifying that the second case 1020 is mounted on the second housing 220 by using the sensor module 176 (for example, case recognition sensor 715), the processor 120 may transfer a second voltage (for example, about 4V) to the coil antenna A2 (for example, second antenna) and may transfer a first voltage (for example, about 4V) which is substantially identical to the second voltage (for example, about 4V) to the metal antenna A1 (for example, first antenna). According to various embodiments, even if the second case 1020 is not mounted on the second housing 220, the processor 120 may apply substantially the same voltage to the metal antenna A1 (for example, first antenna) and the coil antenna A2 (for example, second antenna).

Referring to FIG. 10C, a third case 1030 may be mounted on the second housing 220 of the electronic device 200. For example, the third case 1030 may be detachably mounted on the back surface (for example, the fourth surface 444 or the second rear cover 224 in FIG. 2C) of the second housing 220. For example, the third case 1030 may have a third thickness. For example, the third thickness may be smaller than the second thickness of the second case 1020 described above. For example, the third case 1030 may include a third NFC chip 1000c which the electronic device 200 may identify by using the case recognition sensor 715. For example, the third NFC chip 1000c may include an ID which may be identified through the case recognition sensor 715.

According to an embodiment, in case of identifying that the third case 1030 is mounted on the second housing 220 by using the sensor module 176 (for example, case recognition sensor 715), the processor 120 may transfer a second voltage corresponding to the third NFC chip 1000c and/or the third thickness of the third case 1030 to the coil antenna A2. For example, in case that the electronic device 200 operates in a reader mode (for example, POS function), the processor 120 may transfer a second voltage (for example, about 3.6V) which is higher than a reference voltage (for example, about 3.3V) to the coil antenna A2 in order to compensate for the third thickness of the third case 1030. For example, in case that a second voltage (for example, about 3.6V) which is higher than the reference voltage (for example, about 3.3V) is transferred to the coil antenna A2, the NFC performance of the coil antenna A2 may be improved.

According to various embodiments, the third case 1030 may include no third NFC chip 1000c. For example, the third case 1030 may include a case thicker than a third thickness (for example, designated thickness). For example, in case of identifying that a case thicker than the designated thickness is mounted on the second housing 220 by using the sensor module 176 (for example, case recognition sensor 715), the processor 120 may display a user interface (for example, notification) on the sub-display 232 (for example, second display) such that the user is guided to tag the POS device (for example, the POS device 900 in FIG. 9B) by using the metal antenna A1 (for example, first antenna) instead of the coil antenna A2 (for example, second antenna).

According to various embodiments, in case of identifying that the third case 1030 is mounted on the second housing 220 by using the sensor module 176 (for example, case recognition sensor 715), the processor 120 may transfer a second voltage (for example, about 3.6V) to the coil antenna A2 (for example, second antenna) and may transfer a first voltage (for example, about 3.6V) which is substantially identical to the second voltage (for example, about 3.6V) to the metal antenna A1 (for example, first antenna). According to various embodiments, even if the third case 1030 is not mounted on the second housing 220, the processor 120 may apply substantially the same voltage to the metal antenna A1 (for example, first antenna) and the coil antenna A2 (for example, second antenna).

Referring to FIG. 10D, a first LED case 1001 or a second LED case 1002 may be mounted on the second housing 220 of the electronic device 200. For example, the first LED case 1001 or the second LED case 1002 may be detachably mounted on the back surface (for example, the fourth surface 444 or the second rear cover 224 in FIG. 2C) of the second housing 220. For example, different levels of power (for example, reception power) may be transferred from the coil antenna A2 to the first LED case 1001 or the second LED case 1002 according to the number of LEDs and/or the brightness thereof. For example, the first LED case 1001 may operate with first reception power (for example, about 2.8V). For example, the second LED case 1002 may operate with second reception power (for example, about 3.6V).

According to an embodiment, the first LED case 1001 may include a (1-1)^{th} NFC chip 1011 which the electronic device 200 may identify by using the sensor module 176 (for example, case recognition sensor 715). For example, the (1-1)^{th} NFC chip 1011 may include a first ID (for example, 000000001) which may be identified through the case recognition sensor 715.

According to an embodiment, the second LED case 1002 may include a (1-2)^{th} NFC chip 1012 which the electronic device 200 may identify by using the sensor module 176 (for example, case recognition sensor 715). For example, the (1-2)^{th} NFC chip 1012 may include a second ID (for example, 000000002) which may be identified through the case recognition sensor 715.

According to an embodiment, in case of identifying that the first LED case 1001 is mounted on the second housing 220 by using the sensor module 176 (for example, case recognition sensor 715), the processor 120 may transfer a second voltage (for example, about 2.8V) corresponding to the (1-1)^{th} NFC chip 1011 and the first ID (for example, 000000001) of the first LED case 1001 to the coil antenna A2.

According to an embodiment, in case of identifying that the second LED case 1002 is mounted on the second housing 220 by using the sensor module 176 (for example, case recognition sensor 715), the processor 120 may transfer a second voltage (for example, about 3.6V) corresponding to the (1-2)^{th} NFC chip 1012 and the second ID (for example, 000000002) of the second LED case 1002 to the coil antenna A2.

According to an embodiment, the processor 120 may variably control the second voltage transferred to the coil antenna A2 according to the reception power necessary for the first LED case 1001 or the second LED case 1002, thereby reducing unnecessary current consumption or improving the NFC performance.

According to an embodiment, in case that one of the first case 1010, the second case 1020, the third case 1030, the first LED case 1001, and the second LED case 1002 is mounted on the second housing 220 of the electronic device 200, the processor 120 may control the NFC circuit 192 such that a second voltage, which is higher than a first voltage transferred to the metal antenna A1, is transferred to the coil antenna A2.

According to various embodiments, in case that one of the first case 1010, the second case 1020, the third case 1030, the first LED case 1001, and the second LED case 1002 is mounted on the second housing 220 of the electronic device 200, the processor 120 may control the NFC circuit 192 such that substantially the same voltage is transferred to the metal antenna A1 and the coil antenna A2.

According to various embodiments, even if one of the first case 1010, the second case 1020, the third case 1030, the first LED case 1001, and the second LED case 1002 is not mounted on the second housing 220 of the electronic device 200, the processor 120 may apply substantially the same voltage to the metal antenna A1 (for example, first antenna) and the coil antenna A2 (for example, second antenna).

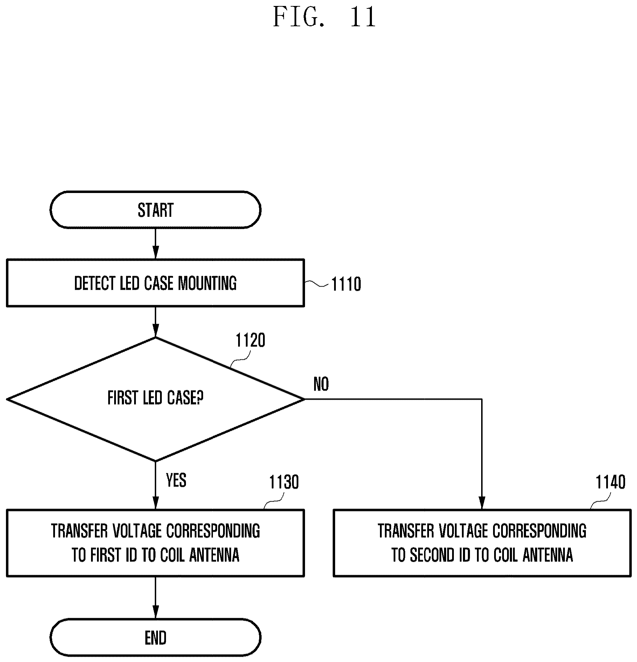

FIG. 11 is a flowchart illustrating a method for variably controlling the voltage transferred to a coil antenna in case that an LED case is mounted on an electronic device according to an embodiment of the disclosure.

In operation 1110, the electronic device 200 (for example, processor 120) may detect mounting of an LED case (for example, first LED case 1001 or second LED case 1002) on the second housing 220 by using the sensor module 176 (for example, case recognition sensor 715).

In operation 1120, the processor 120 may identify whether the first LED case 1001 or second LED case 1002 has been mounted on the second housing 220, by using the case recognition sensor 715.

According to an embodiment, the processor 120 may identify the first ID corresponding to the (1-1)^{th} NFC chip 1011 mounted on the first LED case 1001 and the second ID corresponding to the (1-2)^{th} NFC chip 1012 mounted on the second LED case 1002 by using the case recognition sensor 715, thereby identifying that the first LED case 1001 or second LED case 1002 is mounted on the second housing 220.

In operation 1130, in case that the first LED case 1001 is mounted on the second housing 220, the processor 120 may transfer a voltage (for example, about 2.8V) corresponding to the first ID to the coil antenna A2.

According to various embodiments, in case that the first LED case 1001 is mounted on the second housing 220, the processor 120 may transfer substantially the same voltage (for example, about 2.8V) as the voltage transferred to the coil antenna A2 to the metal antenna A1.

In operation 1140, in case that the second LED case 1002 is mounted on the second housing 220, the processor 120 may transfer a voltage (for example, about 3.6V) corresponding to the second ID to the coil antenna A2.

According to various embodiments, in case that the second LED case 1002 is mounted on the second housing 220, the processor 120 may transfer substantially the same voltage (for example, about 3.6V) as the voltage transferred to the coil antenna A2 to the metal antenna A1.

According to an embodiment, in case that an LED case (for example, first LED case 1001 or second LED case 1002) is mounted on the second housing 220 of the electronic device 200, the processor 120 may control the NFC circuit 192 such that a second voltage, which is higher than a first voltage transferred to the metal antenna A1, is transferred to the coil antenna A2.

According to various embodiments, in case that an LED case (for example, first LED case 1001 or second LED case 1002) is mounted on the second housing 220 of the electronic device 200, the processor 120 may control the NFC circuit 192 such that substantially the same voltage is transferred to the metal antenna A1 and the coil antenna A2.

According to an embodiment, in case that the first LED case 1001 including the first ID is mounted on the second housing 220 of the electronic device 200, the processor 120 may control the NFC circuit 192 such that the voltage (for example, about 2.8V) corresponding to the first ID is transferred to the coil antenna A2.

According to an embodiment, in case that the second LED case 1002 including the second ID is mounted on the second housing 220 of the electronic device 200, the processor 120 may control the NFC circuit 192 such that the voltage (for example, about 3.6V) corresponding to the second ID is transferred to the coil antenna A2.

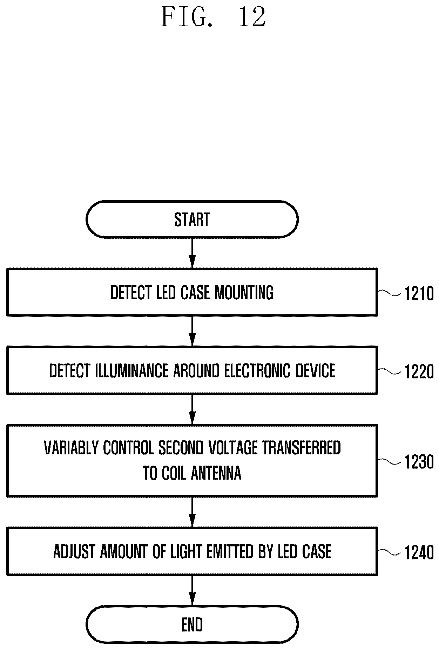

FIG. 12 is a flowchart schematically illustrating a method for detecting the illuminance around an electronic device according to an embodiment of the disclosure and variably controlling the voltage transferred to a metal antenna.

In operation 1210, the electronic device 200 (for example, processor 120) may detect mounting of an LED case (for example, first LED case 1001 or second LED case 1002) on the second housing 220 by using the sensor module 176 (for example, case recognition sensor 715).

In operation 1220, the processor 120 may detect the illuminance around the electronic device 200 by using the sensor module 176 (for example, illuminance sensor 717).

In operation 1230, based on the illuminance around the electronic device 200 detected by using the illuminance sensor 717, the processor 120 may variably control the second voltage transferred to the coil antenna A2.

In operation 1240, the processor 120 may adjust the amount of light emitted by the LED case (for example, first LED case 1001 or second LED case 1002) by variably controlling the second voltage transferred to the coil antenna A2.

According to an embodiment, in case that the environment around the electronic device 200 is dark, the processor 120 may drop the level of the second voltage transferred to the coil antenna A2. In case that the environment around the electronic device 200 is bright, the processor 120 may raise the level of the second voltage transferred to the coil antenna A2.

For example, the transmission voltage of the coil antenna A2 and the reception power of the LED case (for example, first LED case 1001 or second LED case 1002), which correspond to the illuminance around the electronic device 200, may be adjusted as in [Table 1] below:

**[Table 1]**

| Illuminance around electronic device | Transmission voltage of coil antenna | Reception power of LED case |
|---|---|---|
| 0-200 lux | about 2.8V | about 47.6mW |
| 200-400 lux | about 3.3V | about 66.0mW |
| 400 lux or higher | about 3.6V | about 78.0mW |

According to an embodiment, by variably controlling the transmission voltage (for example, second voltage) transferred to the coil antenna A2 according to the illuminance around the electronic device 200, unnecessary current consumption by the LED case (for example, first LED case 1001 or second LED case 1002) may be reduced.

According to various embodiments, embodiments related to the methods described above with reference to FIG. 7, FIG. 8, FIG. 11, and FIG. 12 may be executed respectively, or merged with each other and then executed.

According to various embodiments, although a foldable electronic device has been described as an example of the electronic device 200 in the above embodiments, the disclosure is not limited thereto, and may be substantially equally applied to bar-type electronic devices 1300 and 1400 described below. For example, the electronic devices 1300 and 1400 described below may substantially equally include at least some embodiments of the electronic device 200 (for example, foldable electronic device) illustrated in FIG. 1A to FIG. 12. In the following description of the electronic devices 1300 and 1400, components substantially identical to those in the embodiments described above with reference to FIG. 1A to FIG. 12 may be given identical reference numerals, and repeated descriptions of functions thereof may be omitted herein.

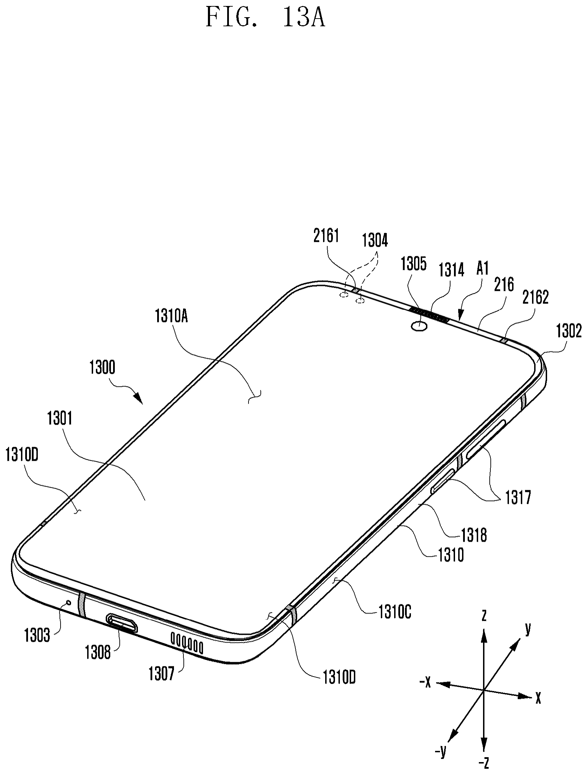

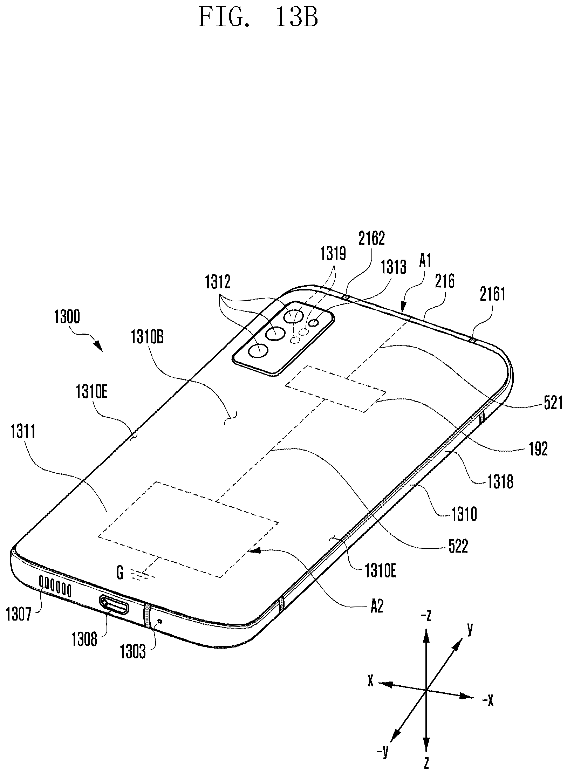

FIG. 13A is a front perspective view of an electronic device according to various embodiments of the disclosure. FIG. 13B is a rear perspective view of the electronic device according to various embodiments of the disclosure.

Referring to FIG. 13A and FIG. 13B, an electronic device 1300 may include a housing 1310 including a first surface (or front surface) 1310A, a second surface (or rear surface) 1310B, and a side surface 1310C surrounding the space between the first surface 1310A and the second surface 1310B. In another embodiment (not illustrated), the housing 1310 may denote a structure that forms a part of the first surface 1310A, the second surface 1310B, and the side surface 1310C illustrated in FIG. 13A and FIG. 13B. According to an embodiment, the first surface 1310A may be formed by a front plate 1302, at least a part of which is substantially transparent (for example, a glass plate including various coating layers, or a polymer plate). The second surface 1310B may be formed by a rear plate 1311 that is substantially opaque. The rear plate 1311 may be made of coated or colored glass, ceramic, polymer, metal (for example, aluminum, stainless steel (STS), or magnesium), or a combination of at least two of the above-mentioned materials. The side surface 1210C may be formed by a side bezel structure (or "side member") 1318 which is coupled to the front plate 1302 and to the rear plate 1311, and which includes metal and/or polymer. In some embodiments, the rear plate 1311 and the side bezel structure 1318 may be formed integrally and may include the same material (for example, a metal material such as aluminum).

In the illustrated embodiment, the front plate 1302 may include two first areas 1310D on both ends of the long edge of the front plate 1302 such that the two first areas 1310D bend from the first surface 1310A toward the rear plate 1311 and extend seamlessly. In the illustrated embodiment (see FIG. 13B), the rear plate 1311 may include two second areas 1310E on both ends of the long edge such that the two second areas 1310E bend from the second surface 1310B toward the front plate 1302 and extend seamlessly. In some embodiments, the front plate 1302 (or the rear plate 1311) may include only one of the first areas 1310D (or the second areas 1310E). In another embodiment, a part of the first areas 1310D or the second areas 1310E may not be included. In the above embodiments, when seen from the side surface of the electronic device 1300, the side bezel structure 1318 may have a first thickness (or width) on a part of the side surface, which does not include the first areas 1310D or the second areas 1310E as described above, and may have a second thickness that is smaller than the first thickness on a part of the side surface, which includes the first areas 1310D or the second areas 1310E.

According to an embodiment, the electronic device 1300 may include at least one of a display 1301, audio modules 1303, 1307, and 1314, sensor modules 1304, and 1319, camera modules 1305, 1312, and 1313, a key input device 1317, indicator(not illustrated), and connector hole 1308. In some embodiments, at least one of the constituent elements (for example, the key input device 1317 or the indicator) of the electronic device 1300 may be omitted, or the electronic device 1300 may additionally include another constituent element.

The display 1301 may be exposed through a corresponding part of the front plate 1302, for example. In some embodiments, at least a part of the display 1301 may be exposed through the front plate 1302 that forms the first areas 1310D of the side surface 1310C and the first surface 1310A. In some embodiments, the display 201 may have a corner formed in substantially the same shape as that of the adjacent outer periphery of the front plate 1302. In another embodiment (not illustrated), in order to increase the area of exposure of the display 1301, the interval between the outer periphery of the display 1301 and the outer periphery of the front plate 1302 may be formed to be substantially identical.

In another embodiment (not illustrated), a recess or an opening may be formed in a part of the screen display area of the display 1301, and at least one of an audio module 1314, a sensor module 1304, and a camera module 1305 may be included and aligned with the recess or the opening. In another embodiment (not illustrated), on the back surface of the screen display area of the display 1301, at least one of an audio module 1314, a sensor module 1304, and a camera module 1305 may be included. In another embodiment (not illustrated), the display 1301 may be coupled to or arranged adjacent to a touch sensing circuit, a pressure sensor capable of measuring the intensity (pressure) of a touch, and/or a digitizer that detects a magnetic field-type stylus pen. In some embodiments, at least a part of the sensor modules 1304 and 1319 and/or at least a part of the key input device 1317 may be arranged in the first areas 1310D and/or the second areas 1310E.

The audio modules 1303, 1307, and 1314 may include a microphone hole 1303 and speaker holes 1307 and 1314. A microphone for acquiring an external sound may be arranged in the microphone hole 1303, and a plurality of microphones may be arranged therein such that the direction of a sound can be sensed in some embodiments. The speaker holes 1307 and 1314 may include an outer speaker hole 1307 and a speech receiver hole 1314. In some embodiments, the speaker holes 1307 and 1314 and the microphone hole 1303 may be implemented as a single hole, or a speaker may be included (for example, a piezoelectric speaker) without the speaker holes 1307 and 1314.

The sensor modules 1304 and 1319 may generate an electric signal or a data value corresponding to the internal operating condition of the electronic device 1300 or the external environment condition thereof. The sensor modules 1304 and 1319 may include, for example, a first sensor module 1304 (for example, a proximity sensor) arranged on the first surface 1310A of the housing 1310, and/or a second sensor module (not illustrated) (for example, a fingerprint sensor), and/or a third sensor module 1319 (for example, an HRM sensor) arranged on the second surface 1310B of the housing 1310. The fingerprint sensor may be arranged not only on the first surface 1310A (for example, the display 1301) of the housing 1310, but also on the second surface 1310B thereof. The electronic device 1300 may further include a sensor module not illustrated, for example, at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or a luminance sensor.

The camera modules 1305, 1312, and 1313 may include a first camera device 1305 arranged on the first surface 1310A of the electronic device 1300, a second camera device 1312 arranged on the second surface 1310B thereof, and/or a flash 1313. The camera modules 1305 and 1312 may include a single lens or a plurality of lenses, an image sensor, and/or an image signal processor. The flash 1313 may include, for example, a light-emitting diode or a xenon lamp. In some embodiments, two or more lenses (an infrared camera, a wide-angle lens, and a telephoto lens) and image sensors may be arranged on a single surface of the electronic device 1300.

The key input device 1317 may be arranged on the side surface 1310C of the housing 1310. In another embodiment, the electronic device 1300 may not include a part of the above-mentioned key input device 1317 or the entire key input device 1317, and the key input device 1317 (not included) may be implemented in another type, such as a soft key, on the display 1301. In some embodiments, the key input device 1317 may include a sensor module arranged on the second surface 1310B of the housing 1310.

The indicator may be arranged on the first surface 1310A of the housing 1310, for example. The indicator may provide information regarding the condition of the electronic device 1300 in a light type, for example. In another embodiment, the indicator may provide a light source that interworks with operation of the camera module 1305, for example. The indicator may include, for example, an LED, an IR LED, and a xenon lamp.

The connector hole 1308 may include a first connector hole 1308 capable of containing a connector (for example, a USB connector) for transmitting/receiving power and/or data to/from an external electronic device, and/or a second connector hole (for example, an earphone jack) capable of containing a connector for transmitting/receiving an audio signal to/from the external electronic device.

Referring to FIG. 13A and FIG. 13B, the lateral member 1318 (for example, lateral bezel structure) according to various embodiments of the disclosure may form at least a part of the exterior of the electronic device 1300. The lateral member 1318 (for example, housing 1310) may be formed to surround the space between the front plate 1302 and the rear plate 1311. For example, the rear plate 1311 may be made of a nonconductive material.

According to an embodiment, the lateral member 1318 (for example, housing 1310) may have a first nonconductive portion 2161 and a second nonconductive portion 2162 formed thereon. For example, the first nonconductive portion 2161 and the second nonconductive portion 2162 may be formed on the lateral member 1318 (for example, housing 1310) in a first direction (for example, y-axis direction or upward direction). For example, the first nonconductive portion 2161 and the second nonconductive portion 2162 may be formed on the lateral member 1318 (for example, housing 1310) in a first position (for example, upward direction). For example, the first nonconductive portion 2161 and the second nonconductive portion 2162 may include a segmented portion or a slit.

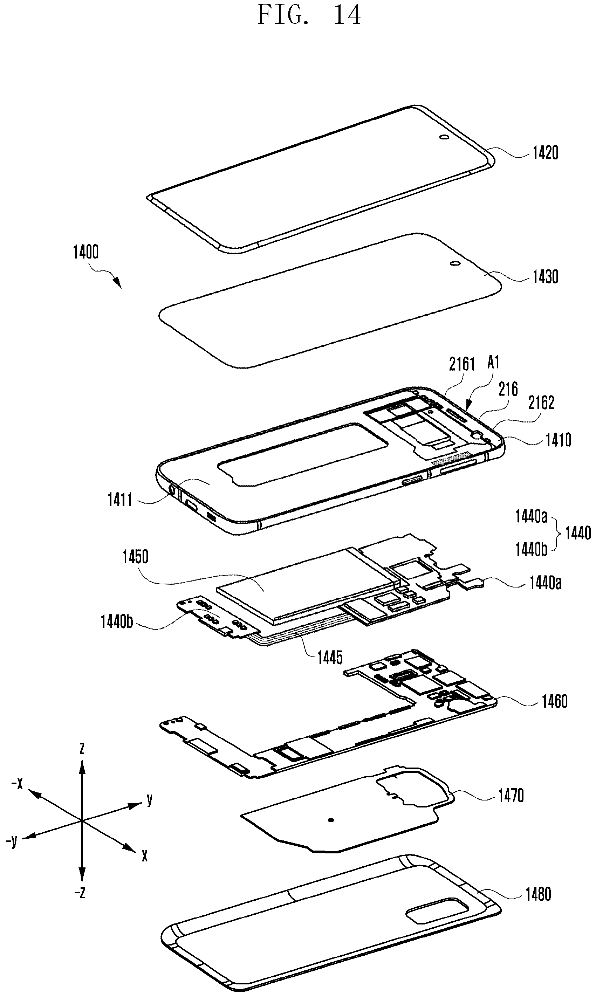

According to an embodiment, a conductive portion 216 (for example, antenna radiator) may be disposed between the first nonconductive portion 2161 and the second nonconductive portion 2162. For example, the conductive portion 216 may be electrically connected to the NFC circuit 192. For example, the conductive portion 216 may be electrically connected to the NFC circuit 192 and may operate as a metal antenna A1 (for example, first antenna). For example, the metal antenna A1 may include the conductive portion 216 (for example, antenna radiator). For example, the metal antenna A1 may perform NFC with external electronic devices (for example, the external electronic devices 102 and 104 in FIG. 1A). For example, the metal antenna A1 may be electrically connected to the NFC circuit 192 through a first conductive path 521 (for example, the connecting member 1445 in FIG. 14). For example, the first conductive path 521 may include a flexible printed circuit board (FPCB). For example, the metal antenna A1 may be electrically connected to the NFC circuit 192 through the matching circuit 510 illustrated in FIG. 5. The electronic device 1300 illustrated in FIG. 13A and FIG. 13B may include the matching circuit 510 illustrated in FIG. 5.

According to an embodiment, a coil antenna A2 (for example, second antenna) may be disposed in the lateral member 1318 (for example, housing 1310). For example, the coil antenna A2 may be included in the lateral member 1318 (for example, housing 1310) in a second direction (for example, -y-axis direction or downward direction). For example, the coil antenna A2 may be disposed on the lateral member 1318 (for example, housing 1310) in a second position (for example, downward direction). For example, the coil antenna A2 (for example, second antenna) may include the antenna 1470 illustrated in FIG. 14. For example, the coil antenna A2 (for example, second antenna) may include a coil pattern having a wire wound helically.

According to an embodiment, the coil antenna A2 (for example, second antenna) may be electrically connected to the NFC circuit 192. For example, the coil antenna A2 may be electrically connected to the NFC circuit 192 through the matching circuit 510 illustrated in FIG. 5. For example, the coil antenna A2 may perform NFC with external electronic devices (for example, the external electronic devices 102 and 104 in FIG. 1A). For example, the coil antenna A2 may be electrically connected to the NFC circuit 192 through a second conductive path 522 (for example, the connecting member 1445 in FIG. 14). For example, the second conductive path 522 may include a flexible printed circuit board (FPCB). A part of the coil antenna A2 may be electrically connected to the ground G.

According to an embodiment, the NFC circuit 192 may be included in a printed circuit board (for example, the printed circuit board 1440 in FIG. 14) disposed inside the lateral member 1318 (for example, housing 1310).

According to an embodiment, the NFC circuit 192 may transfer a voltage transferred through a battery (for example, the battery 189 in FIG. 1A or the battery 1450 in FIG. 14) to the metal antenna A1 (for example, first antenna) and the coil antenna A2 (for example, second antenna). For example, the NFC circuit 192 may transfer a voltage transferred from the battery (for example, the battery 189 in FIG. 1A or the battery 1450 in FIG. 14) to the metal antenna A1 and the coil antenna A2. For example, the NFC circuit 192 may transfer a voltage necessary for NFC and/or a feeding signal to the metal antenna A1 and the coil antenna A2.

According to an embodiment, the NFC circuit 192 may transfer a variable voltage (for example, transmission voltage) to the metal antenna A1 and/or the coil antenna A2. For example, the NFC circuit 192 may be electrically connected to the metal antenna A1 through the first conductive path 521, and may be electrically connected to the coil antenna A2 through the second conductive path 522. For example, the NFC circuit 192 may transfer a first voltage to the metal antenna A1 according to the control of the processor 120, and may transfer a second voltage to the coil antenna A2. For example, the first voltage may be higher than the second voltage. For example, the second voltage may be higher than the first voltage. For example, the first and second voltages may variably change according to the control of the processor 120 and/or the NFC circuit 192.

According to an embodiment, in case that a grip signal is detected from a part of the housing 1310 (for example, lateral member 1318) in the second direction (for example, -y-axis direction or downward direction) through the sensor module 176 (for example, grip sensor 713), the processor 120 may transfer a first voltage to the metal antenna A1 (for example, first antenna) and may transfer a second voltage to the coil antenna A2 (for example, second antenna). For example, the first voltage may be higher than the second voltage.

According to an embodiment, in case of a state in which a part of the housing 1310 (for example, lateral member 1318) in the second direction (for example, -y-axis direction or downward direction) is gripped by the user's hand, the processor 120 may control the NFC circuit 192 such that a first voltage, which is higher than a second voltage transferred to the coil antenna A2, is transferred to the metal antenna A1.

According to an embodiment, in case that a grip signal is detected from a part of the housing 1310 (for example, lateral member 1318) in the first direction (for example, y-axis direction or upward direction) through the grip sensor 713, the processor 120 may control the NFC circuit 192 such that a second voltage, which is higher than a first voltage transferred to the metal antenna A1, is transferred to the coil antenna A2.

According to an embodiment, in case that the electronic device 1300 is used in a reader mode (for example, POS function), the processor 120 may control the NFC circuit 192 such that a second voltage, which is higher than a first voltage transferred to the metal antenna A1, is transferred to the coil antenna A2.

FIG. 14 is an exploded perspective view of the electronic device according to various embodiments of the disclosure.

Referring to FIG. 14, the electronic device 1400 may include a side member (1410) (for example, a side bezel structure), a first support member 1411 (for example, a bracket), a front plate 1420, a display 1430, a printed circuit board 1440, a battery 1450, a second support member 1460 (for example, a rear case), an antenna 1470, and a rear plate 1480. In some embodiments, at least one of the constituent elements (for example, the first support member 1411 or the second support member 1460) of the electronic device 300 may be omitted, or the electronic device 1400 may further include another constituent element. At least one of the constituent elements of the electronic device 1400 may be identical or similar to at least one of the constituent elements of the electronic device 101 of FIG. 1A and/or the electronic device 1300, and repeated descriptions thereof will be omitted herein.

The first support member 1411 may be arranged inside the electronic device 1400 and connected to the side member 1410, or may be formed integrally with the side member 1410. The first support member 1411 may be made of a metal material and/or a nonmetal (for example, polymer) material, for example. The display 1430 may be coupled to one surface of the first support member 1411, and the printed circuit board 1440 may be coupled to the other surface thereof. A processor 120, a memory 130, and/or an interface 177 may be mounted on the printed circuit board 1440. The processor may include, for example, one or more of a central processing device, an application processor, a graphic processing device, an image signal processor, a sensor hub processor, or a communication processor.

The memory may include a volatile memory or a non-volatile memory, for example.

The interface may include, for example, a high definition multimedia interface (HDMI), a universal serial bus (USB) interface, an SD card interface, and/or an audio interface. The interface may connect the electronic device 300 with an external electronic device electrically or physically, for example, and may include a USB connector, an SD card/MMC connector, or an audio connector.

The battery 1450 is a device for supplying power to at least one constituent element of the electronic device 1400, and may include a non-rechargeable primary cell, a rechargeable secondary cell, or a fuel cell, for example. At least a part of the battery 1450 may be arranged on substantially the same plane with the printed circuit board 1440, for example. The battery 1450 may be arranged integrally inside the electronic device 1400, or may be arranged such that the same can be attached to/detached from the electronic device 1400.

The antenna 1470 may be arranged between the rear plate 1480 and the battery 1450. The antenna 1470 may include, for example, a near field communication (NFC) antenna, a wireless charging antenna, and/or a magnetic secure transmission (MST) antenna. The antenna 1470 may conduct near-field communication with an external device or may wirelessly transmit/receive power necessary for charging, for example. In another embodiment, an antenna structure may be formed by a part or a combination of the side member 1410 and/or the first support member 1411

According to an embodiment, the printed circuit board 1440 may be disposed on one surface (for example, -z-axis direction) of the first support member 1411. The printed circuit board 1440 may include a first PCB 1440a and/or a second PCB 1440b. For example, the first PCB 1440a and the second PCB 1440b may be disposed to be spaced apart from each other, and may be electrically connected through a connecting member 1445 (for example, coaxial cable and/or FPCB). In an embodiment, the printed circuit board 1440 may include a structure in which multiple printed circuit boards are stacked. For example, the printed circuit board 1440 may include an interposer structure. In an embodiment, the printed circuit board 1440 may be implemented in the type of a flexible printed circuit board (FPCB) and/or a rigid printed circuit board (PCB).

An electronic device 200, 1300 according to an embodiment of the disclosure may include a sensor module 176, a near field communication circuit 192, a metal antenna A1 which is electrically connected to the near field communication circuit 192, and which includes a conductive portion 216 disposed between a first nonconductive portion 2161 and a second nonconductive portion 2162, a coil antenna A2 electrically connected to the near field communication circuit 192, a processor 120, and a memory 130 configured to store instructions. According to an embodiment, the instructions, when executed by the processor 120, may cause the electronic device 200, 1300 to identify the state of the electronic device through the sensor module 176 and, based on the state of the electronic device detected through the sensor module 176, control the near field communication circuit 192 so as to transfer a first voltage to the metal antenna A1 and to transfer a second voltage to the coil antenna A2.

According to an embodiment the electronic device 1300 may further include a housing 1310, and the instructions, when executed by the processor 120, may cause the electronic device to control the near field communication circuit 192 such that, in case that a grip signal is detected from a part of the housing 1310 in a first direction through the sensor module 176, the second voltage higher than the first voltage is transferred to the coil antenna A2 and, in case that a grip signal is detected from a part of the housing 1310 in a second direction opposite to the first direction, the first voltage higher than the second voltage is transferred to the metal antenna A1.

According to an embodiment, the electronic device 200 may further include a first housing 210, a second housing 220, and a hinge 240 coupled between the first housing 210 and the second housing 220, the metal antenna A1 may be disposed on the first housing 210, and the coil antenna A2 may be disposed on the second housing 220.

According to an embodiment, the instructions, when executed by the processor 120, may cause the electronic device to control the near field communication circuit 192 such that, in case that the first housing 210 and the second housing 220 are in an unfolded state, the first voltage higher than the second voltage transferred to the coil antenna A2 is transferred to the metal antenna A1.

According to an embodiment, the instructions, when executed by the processor 120, may cause the electronic device to control the near field communication circuit 192 such that, in case that the first housing 210 and the second housing 220 are in a folded state, the second voltage higher than the first voltage transferred to the metal antenna A1 is transferred to the coil antenna A2.

According to an embodiment, the instructions, when executed by the processor 120, may cause the electronic device to control the near field communication circuit 192 such that, in case that a first LED case 1001 or a second LED case 1002 is mounted on the second housing 220, the second voltage higher than the first voltage transferred to the metal antenna A1 is transferred to the coil antenna A2.

According to an embodiment, the instructions, when executed by the processor 120, may cause the electronic device to control the near field communication circuit 192 such that, in case that the first LED case 1001 including a first ID is mounted on the second housing 220, a voltage corresponding to the first ID is transferred to the coil antenna A2.

According to an embodiment, the instructions, when executed by the processor 120, may cause the electronic device to control the near field communication circuit 192 such that, in case that the second LED case 1002 including a second ID is mounted on the second housing 220, a voltage corresponding to the second ID is transferred to the coil antenna A2.

According to an embodiment, the instructions, when executed by the processor 120, may cause the electronic device to detect illuminance around the electronic device 200 by using the sensor module 176, and variably control the second voltage transferred from the near field communication 192 to the coil antenna A2, based on the detected illuminance, thereby adjusting the amount of light emitted by the first LED case 1001 or the second LED case 1002.

According to an embodiment, the instructions, when executed by the processor 120, may cause the electronic device to control the near field communication circuit 192 such that, in case that the electronic device is used in a reader mode, the second voltage higher than the first voltage transferred to the metal antenna A1 is transferred to the coil antenna A2.

According to an embodiment, the instructions, when executed by the processor 120, may cause the electronic device to control the near field communication circuit 192 such that, in case that a grip signal is detected from the second housing 220, the first voltage higher than the second voltage transferred to the coil antenna A2 is transferred to the metal antenna A1.

According to an embodiment, the electronic device 200 may further include a matching circuit 510 electrically connected to the near field communication circuit 192, and the matching circuit 510 may be electrically connected to the metal antenna A1 through a first conductive path 521 and may be electrically connected to the coil antenna A2 through a second conducive path 522.

A method for controlling the voltage of an electronic device 200 according to an embodiment of the disclosure may include an operation of identifying whether a first housing 210 and a second housing 220 of the electronic device 200 are in an unfolded state or in a folded state, an operation of identifying whether a grip signal is detected from the second housing 220 in case that the first housing 210 and the second housing 220 are in an unfolded state, and an operation of transferring a first voltage to a metal antenna A1 disposed on the first housing 210 in case that the grip signal is detected from the second housing 220.

According to an embodiment, the method may further include an operation of transferring a second voltage to a coil antenna A2 disposed on the second housing 220 in case that the first housing 210 and the second housing 220 are in a folded state, and in case that the grip signal is not detected from the second housing 220.

According to an embodiment, the method may further include an operation of controlling the first voltage transferred to the metal antenna A1 to be higher than the second voltage transferred to the coil antenna A2 in case that the first housing 210 and the second housing 220 are in an unfolded state, and in case that the grip signal is detected from the second housing 220.

According to an embodiment, the method may further include an operation of controlling the second voltage transferred to the coil antenna A2 to be higher than the first voltage transferred to the metal antenna A1 in case that the first housing 210 and the second housing 220 are in a folded state, and in case that the grip signal is not detected from the second housing 220.

According to an embodiment, the method may further include an operation of detecting mounting of a first LED case 1001 including a first identifier (ID) or a second LED case 1002 including a second ID on the second housing 220, and an operation of transferring the second voltage higher than the first voltage transferred to the metal antenna A1 to the coil antenna A2 in case that the first LED case 1001 or the second LED case 1002 is mounted on the second housing 220.

According to an embodiment, the method may further include an operation of transferring a voltage corresponding to the first ID to the coil antenna A2 in case that the first LED case 1001 is mounted on the second housing 220.

According to an embodiment, the method may further include an operation of transferring a voltage corresponding to the second ID to the coil antenna A2 in case that the second LED case 1002 is mounted on the second housing 220.

According to an embodiment, the method may further include an operation of detecting illuminance around the electronic device 200, an operation of variably controlling the second voltage transferred to the coil antenna A2, based on the detected illuminance, and an operation of adjusting the amount of light emitted by the first LED case 1001 or the second LED case 1002.

According to an embodiment, the method may further include an operation of transferring the second voltage higher than the first voltage transferred to the metal antenna A1 to the coil antenna A2 in case that the electronic device 200 is used in a reader mode.

An electronic device 1300, 1400 according to various embodiments of the disclosure may include a housing 1310 including a front plate 1302, a rear plate 1311, and a lateral member 1318 surrounding a space between the front plate 1302 and the rear plate 1311. According to an embodiment, the electronic device 1300, 1400 may include a first nonconductive portion 2161 and a second nonconductive portion 2162 formed on the lateral member 1318 in a first direction, a metal antenna A1 including a conductive portion 216 disposed between the first nonconductive portion 2161 and the second nonconductive portion 2162, and a coil antenna A2 disposed in the lateral member 1318 in a second direction opposite to the first direction. According to an embodiment, the electronic device 1300, 1400 may include a near field communication circuit 192 electrically connected to the metal antenna A1 and the coil antenna A2, a sensor module 176 configured to detect a grip position of the housing 1310, a processor 120, and a memory 130 configured to store instructions.

According to an embodiment, the processor 120 may transfer a first voltage to the metal antenna A1 in case that a grip signal is detected from a part of the housing 1310 in the second direction, and may transfer a second voltage higher than the first voltage to the coil antenna A2 in case that a grip signal is detected from a part of the housing 1310 in the first direction. According to an embodiment, the first voltage transferred to the metal antenna A1 in case that the grip signal is detected from a part of the housing 1310 in the second direction may have a voltage higher than the second voltage transferred to the coil antenna A2 in case that the grip signal is detected from a part in the first direction.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Embodiments of the disclosure have been presented as specific examples in the specification and drawings in order to easily describe technical content according to embodiments of the disclosure and to help understanding of embodiments of the disclosure, and are not intended to limit the scope of embodiments of the disclosure. Therefore, the scope of an embodiment of the disclosure is to be interpreted as encompassing all changed or modified forms derived based on technical features of an embodiment of the disclosure in addition to the embodiments disclosed herein.

An electronic device according to an embodiment may comprise: a sensor module; a communication circuit; a first antenna electrically connected to the communication circuit; a second antenna electrically connected to the communication circuit; a processor; and a memory configured to store instructions. The instructions, when executed by the processor, may cause the electronic device to: identify the state of the electronic device through the sensor module; and, based on the state of the electronic device detected through the sensor module, control the communication circuit to transfer a first voltage to the first antenna and to transfer a second voltage to the second antenna.

The communication circuit may be a near field communication circuit. The first antenna may be a metal antenna, and/or the first antenna may comprise a conductive portion disposed between a first nonconductive portion and a second nonconductive portion. The second antenna may be a coil antenna.

The device's state detected through the sensor module may comprise a state of being folded, a state of being unfolded, a state of being gripped in first area of the electronic device, an illuminance state, a state of being fitted to a case, and a state of being fitted to a case wherein the case comprises an LED.

An electronic device according to an embodiment may comprise: a sensor module; a communication circuit; a first antenna electrically connected to the communication circuit; a second antenna electrically connected to the communication circuit; a processor; and a memory configured to store instructions. The instructions, when executed by the processor, may cause the electronic device to: control the communication circuit to transfer a first voltage to the first antenna and to transfer a second voltage to the second antenna; identify the state of the electronic device through the sensor module; and, based on the state of the electronic device detected through the sensor module, control the communication circuit to transfer a third voltage different to the first voltage to the first antenna or to transfer a fourth voltage different to the second voltage to the second antenna. Based on the state of the electronic device detected through the sensor module, the electronic device may control the communication circuit to transfer a third voltage different to the first voltage to the first antenna and to transfer a fourth voltage different to the second voltage to the second antenna.

The communication circuit may be a near field communication circuit. The first antenna may be a metal antenna, and/or the first antenna may comprise a conductive portion disposed between a first nonconductive portion and a second nonconductive portion. The second antenna may be a coil antenna.

The device's state detected through the sensor module may comprise a state of being folded, a state of being unfolded, a state of being gripped in first area of the electronic device, an illuminance state, a state of being fitted to a case, and a state of being fitted to a case wherein the case comprises an LED.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. An electronic device (200, 1300) comprising:
a sensor module (176);
a near field communication circuit (192);
a metal antenna (A1) electrically connected to the near field communication circuit (192), the metal antenna (A1) comprising a conductive portion (216) disposed between a first nonconductive portion (2161) and a second nonconductive portion (2162);
a coil antenna (A2) electrically connected to the near field communication circuit (192);
a processor (120); and
a memory (130) configured to store instructions,
wherein the instructions, when executed by the processor (120), cause the electronic device (200, 1300) to:
identify the state of the electronic device through the sensor module (176); and
based on the state of the electronic device detected through the sensor module (176), control the near field communication circuit (192) so as to transfer a first voltage to the metal antenna (A1) and to transfer a second voltage to the coil antenna (A2).

2. The electronic device of claim 1, further comprising a housing (1310),
wherein the instructions, when executed by the processor (120), cause the electronic device to control the near field communication circuit (192) such that, in case that a grip signal is detected from a part of the housing (1310) in a first direction through the sensor module (176), the second voltage higher than the first voltage is transferred to the coil antenna (A2) and, in case that a grip signal is detected from a part of the housing (1310) in a second direction opposite to the first direction, the first voltage higher than the second voltage is transferred to the metal antenna (A1).

3. The electronic device of claim 1, further comprising:
a first housing (210);
a second housing (220); and
a hinge (240) coupled between the first housing (210) and the second housing (220),
wherein the metal antenna (A1) is disposed on the first housing (210), and the coil antenna (A2) is disposed on the second housing (220).

4. The electronic device of claim 3, wherein the instructions, when executed by the processor (120), cause the electronic device to control the near field communication circuit (192) such that, in case that the first housing (210) and the second housing (220) are in an unfolded state, the first voltage higher than the second voltage transferred to the coil antenna (A2) is transferred to the metal antenna (A1).

5. The electronic device of claim 3 or 4, wherein the instructions, when executed by the processor (120), cause the electronic device to control the near field communication circuit (192) such that, in case that the first housing (210) and the second housing (220) are in a folded state, the second voltage higher than the first voltage transferred to the metal antenna (A1) is transferred to the coil antenna (A2).

6. The electronic device of one of claims 3 to 5, wherein the instructions, when executed by the processor (120), cause the electronic device to control the near field communication circuit (192) such that, in case that a first LED case (1001) or a second LED case (1002) is mounted on the second housing (220), the second voltage higher than the first voltage transferred to the metal antenna (A1) is transferred to the coil antenna (A2).

7. The electronic device of claim 6, wherein the instructions, when executed by the processor (120), cause the electronic device to:
control the near field communication circuit (192) such that, in case that the first LED case (1001) comprising a first ID is mounted on the second housing (220), a voltage corresponding to the first ID is transferred to the coil antenna (A2); and
control the near field communication circuit (192) such that, in case that the second LED case (1002) comprising a second ID is mounted on the second housing (220), a voltage corresponding to the second ID is transferred to the coil antenna (A2).

8. The electronic device of claim 6 or 7, wherein the instructions, when executed by the processor (120), cause the electronic device to:
detect illuminance around the electronic device (200) by using the sensor module (176); and
variably control the second voltage transferred from the near field communication (192) to the coil antenna (A2), based on the detected illuminance, thereby adjusting the amount of light emitted by the first LED case (1001) or the second LED case (1002).

9. The electronic device of one of claims 1 to 8, wherein the instructions, when executed by the processor (120), cause the electronic device to control the near field communication circuit (192) such that, in case that the electronic device is used in a reader mode, the second voltage higher than the first voltage transferred to the metal antenna (A1) is transferred to the coil antenna (A2).

10. The electronic device of claim 3 or 4, wherein the instructions, when executed by the processor (120), cause the electronic device to control the near field communication circuit (192) such that, in case that a grip signal is detected from the second housing (220), the first voltage higher than the second voltage transferred to the coil antenna (A2) is transferred to the metal antenna (A1).

11. The electronic device of one of claims 1 to 10, further comprising a matching circuit (510) electrically connected to the near field communication circuit (192),
wherein the matching circuit (510) is electrically connected to the metal antenna (A1) through a first conductive path (521) and is electrically connected to the coil antenna (A2) through a second conducive path (522).

12. A method for controlling a voltage of an electronic device (200), the method comprising:
identifying whether a first housing (210) and a second housing (220) of the electronic device (200) are in an unfolded state or in a folded state;
in case that the first housing (210) and the second housing (220) are in an unfolded state, identifying whether a grip signal is detected from the second housing (220); and
in case that the grip signal is detected from the second housing (220), transferring a first voltage to a metal antenna (A1) disposed on the first housing (210).

13. The method of claim 12, further comprising transferring a second voltage to a coil antenna (A2) disposed on the second housing (220) in case that the first housing (210) and the second housing (220) are in a folded state, and in case that the grip signal is not detected from the second housing (220).

14. The method of claim 13, further comprising controlling the first voltage transferred to the metal antenna (A1) to be higher than the second voltage transferred to the coil antenna (A2) in case that the first housing (210) and the second housing (220) are in an unfolded state, and in case that the grip signal is detected from the second housing (220).

15. **16.** The method of claim 13 or 14, further comprising controlling the second voltage transferred to the coil antenna (A2) to be higher than the first voltage transferred to the metal antenna (A1) in case that the first housing (210) and the second housing (220) are in a folded state, and in case that the grip signal is not detected from the second housing (220).
